# EUROPEAN PATENT APPLICATION

(11) **EP 4 651 417 A1**
(43) Date of publication of application: **19.11.2025**
(21) Application number: 23924567.3
(22) Date of filing: 28.02.2023
(51) Int. Cl.: H04L 5/00

(54) **WIRELESS COMMUNICATION METHOD, ACCESS POINT DEVICE AND STATION DEVICE**

(71) Applicant: GUANGDONG OPPO MOBILE TELECOMMUNICATIONS CORP., LTD., Dongguan, Guangdong 523860 (CN)
(72) Inventor: LUO, Chaoming, Dongguan, Guangdong 523860 (CN); LU, Liuming, Dongguan, Guangdong 523860 (CN); LI, Yapu, Dongguan, Guangdong 523860 (CN); ZHOU, Pei, Dongguan, Guangdong 523860 (CN); GAO, Ning, Dongguan, Guangdong 523860 (CN)
(74) Representative: RGTH
(86) International application number: PCT/CN2023/078657
(87) International publication number: WO 2024/178592

(57) **Abstract**

A wireless communication method, an access point device and a station device. The method comprises: when an access point device predicts that at least one station device needs to send, over a first TXOP, latency-sensitive data to the access point device, the access point device sending a first frame to the at least one station device, the first frame being used for requesting the acquisition of cache state information of latency-sensitive data to be transmitted by the at least one station device, wherein the access point device acquires the first TXOP for sending non-latency-sensitive data to a first station device; and according to the condition of response of the at least one station device to the first frame and/or the content of the cache state information, determining a target station device among the at least one station device and/or a resource unit allocated to the target station device, wherein the target station device is a station device among the at least one station device that can send the latency-sensitive data to the access point device using the first TXOP.

## Description

### TECHNICAL FIELD

Embodiments of this application relate to the field of communications, and more specifically, to a wireless communication method, an access point device, and a station device.

### BACKGROUND

In some scenarios, when an access point device is required to transmit downlink data to a station device, the access point device may gain access to a transmission opportunity (Transmission Opportunity) and then transmit the downlink data in the TXOP. If latency-sensitive data is required to be transmitted in the TXOP, how to ensure transmission of a latency-sensitive service by the access point device is an urgent problem to be solved.

### SUMMARY

This application provides a wireless communication method, an access point device, and a station device, which facilitates timely transmission of latency-sensitive data.

According to a first aspect, there is provided a wireless communication method. The wireless communication method includes: in a case in which an access point device predicts that at least one station device is required to transmit latency-sensitive data to the access point device in a first transmission opportunity TXOP, transmitting, by the access point device, a first frame to the at least one station device, where the first frame is used to request to acquire buffer status information of the latency-sensitive data to be transmitted by the at least one station device, and the first TXOP is acquired by the access point device for transmitting non-latency-sensitive data to a first station device; and
determining, based on a response status of the at least one station device to the first frame and/or content of the buffer status information, a target station device in the at least one station device and/or a resource unit allocated to the target station device, where the target station device is a station device that is in the at least one station device and that is able to transmit the latency-sensitive data to the access point device in the first TXOP.

According to a second aspect, there is provided a wireless communication method. The wireless communication method includes: receiving, by a station device, a first frame transmitted by an access point device, where the first frame is used to request to acquire buffer status information of latency-sensitive data to be transmitted by the station device; and
transmitting, by the station device to the access point device, the buffer status information of the latency-sensitive data to be transmitted by the station device.

According to a third aspect, a terminal device is provided, and is configured to execute the method according to the first aspect or implementations of the first aspect.

Specifically, the terminal device includes a functional module configured to execute the method according to the first aspect or implementations of the first aspect.

According to a fourth aspect, a network device is provided and is configured to execute the method according to the second aspect or implementations of the second aspect.

Specifically, the network device includes a functional module configured to execute the method according to the second aspect or implementations of the second aspect.

According to a fifth aspect, a terminal device is provided, and includes a processor and a memory. The memory is configured to store a computer program, and the processor is configured to invoke and run the computer program stored in the memory to execute the method according to the first aspect or implementations of the first aspect.

According to a sixth aspect, a network device is provided, and includes a processor and a memory. The memory is configured to store a computer program, and the processor is configured to invoke and run the computer program stored in the memory, to execute the method according to the second aspect or implementations of the second aspect.

According to a seventh aspect, a chip is provided, and the chip is configured to implement the method according to any one of the first aspect and the second aspect or implementations of the first aspect and the second aspect.

Specifically, the chip includes: a processor, configured to invoke a computer program from a memory and run the computer program, so that a device on which the chip is installed performs the method in any one of the first aspect and the second aspect or each implementation of the any one of the first aspect and the second aspect.

According to an eighth aspect, a computer-readable storage medium is provided and configured to store a computer program, where the computer program causes a computer to execute the method according to any one of the first aspect and the second aspect or implementations of the first aspect and the second aspect.

According to a ninth aspect, a computer program product is provided, and includes computer program instructions, where the computer program instructions cause a computer to execute the method according to any one of the first aspect and the second aspect or implementations of the first aspect and the second aspect.

According to a tenth aspect, a computer program is provided, and when the computer program runs on a computer, the computer executes the method according to any one of the first aspect and the second aspect or implementations of the first aspect and the second aspect.

Through the above technical solutions, in a transmission opportunity hold by an access point device for transmitting non-latency-sensitive data, if the access point device predicts that at least one station device is required to transmit latency-sensitive data to the access point device, the access point device may acquire buffer status information of the latency-sensitive data of the at least one station device, and further allocate a resource unit based on the buffer status information of the latency-sensitive data of the at least one station device, thereby achieving proper allocation of resource units. Furthermore, a station device that has latency-sensitive data may transmit the latency-sensitive data by using the resource unit allocated by the access point device, thereby ensuring timely and reliable transmission of latency-sensitive data.

### BRIEF DESCRIPTION OF DRAWINGS

FIG. 1 is a schematic diagram of an architecture of a communications system according to an embodiment of this application.
FIG. 2 is a schematic diagram of a format of a BSRP trigger frame.
FIG. 3 is a schematic diagram of a format of a QoS Null frame.
FIG. 4 is a schematic diagram of a format of an NFRP trigger frame.
FIG. 5 is a schematic diagram of a format of an NDP feedback report parameter set element.
FIG. 6 is a schematic diagram of interaction in a wireless communication method according to an embodiment of this application.
FIG. 7 is a schematic diagram of a TXOP preemption method according to an embodiment of this application.
FIG. 8 is a schematic diagram of another TXOP preemption method according to an embodiment of this application.
FIG. 9 is a schematic diagram of interaction in another wireless communication method according to an embodiment of this application.
FIG. 10 is a schematic diagram of a TXOP preemption method according to an embodiment of this application.
FIG. 11 is a schematic diagram of another TXOP preemption method according to an embodiment of this application.
FIG. 12 is a schematic diagram of still another TXOP preemption method according to an embodiment of this application.
FIG. 13 is a schematic diagram of interaction in still another wireless communication method according to an embodiment of this application.
FIG. 14 is a schematic diagram of a TXOP preemption method according to an embodiment of this application.
FIG. 15 is a schematic diagram of interaction in yet another wireless communication method according to an embodiment of this application.
FIG. 16 is a schematic diagram of a format of a BA frame according to an embodiment of this application.
FIG. 17 to FIG. 21 are schematic diagrams of a TXOP preemption method according to an embodiment of this application.
FIG. 22 is a schematic block diagram of an access point device according to an embodiment of this application.
FIG. 23 is a schematic block diagram of a station device according to an embodiment of this application.
FIG. 24 is a schematic block diagram of a communications device according to an embodiment of this application.
FIG. 25 is a schematic block diagram of a chip according to an embodiment of this application.
FIG. 26 is a schematic block diagram of a communications system according to an embodiment of this application.

### DESCRIPTION OF EMBODIMENTS

The following describes the technical solutions in embodiments of this application with reference to the accompanying drawings in embodiments of this application. Apparently, the described embodiments are some rather than all of embodiments of this application. All other embodiments obtained by a person of ordinary skill in the art based on embodiments of this application without creative efforts shall fall within the protection scope of this application.

The technical solutions in embodiments of this application may be applied to various communications systems, for example, a wireless local area network (Wireless Local Area Networks, WLAN), wireless fidelity (Wireless Fidelity, WiFi), or another communications system.

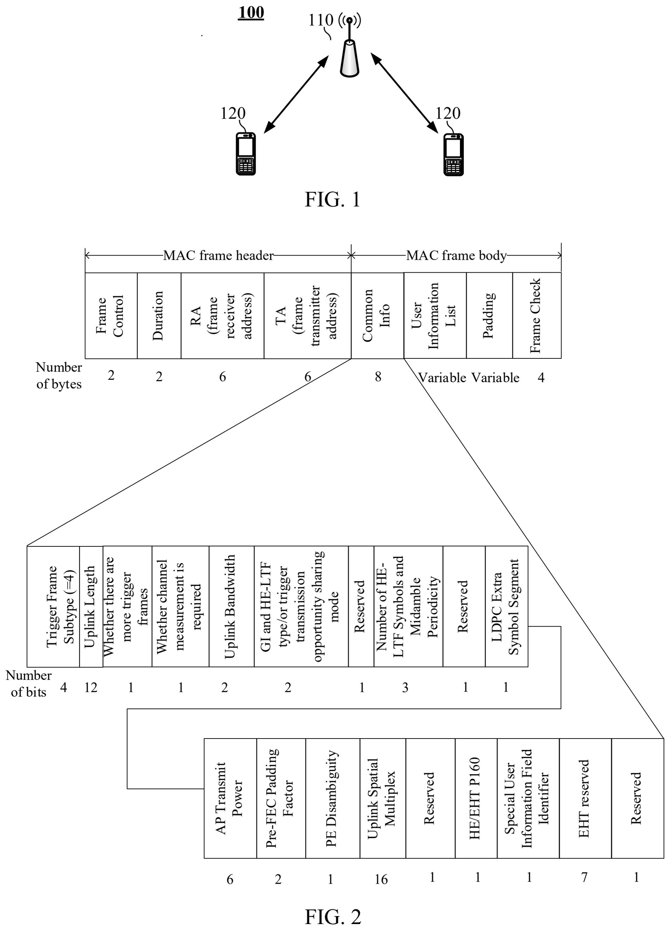

For example, a communications system 100 to which an embodiment of this application is applied is shown in FIG. 1. The communications system 100 may include an access point (Access Point, AP) 110 and stations (STATION, STA) 120 that access a network by using the access point 110.

In some scenarios, an AP is referred to as an AP STA. That is, in a sense, the AP is also a STA.

In some scenarios, a STA is referred to as a non-AP STA (non-AP STA).

Communication in the communications system 100 may be communication between an AP and a non-AP STA, or may be communication between a non-AP STA and a non-AP STA, or communication between a STA and a peer STA, where the peer STA may refer to a device that performs peer-to-peer communication with the STA, for example, the peer STA may be an AP, or may be a non-AP STA.

An AP is equivalent to a bridge that connects a wired network and a wireless network. A major function of the AP is to connect clients in a wireless network together and then connects the wireless network to an Ethernet. An AP device may be a terminal device (for example, a mobile phone) or a network device (for example, a router) that has a Wi-Fi chip.

It should be understood that a role of a STA in a communications system is not fixed. For example, in some scenarios, when a mobile phone is connected to a router, the mobile phone is a non-AP STA; when the mobile phone serves as a hotspot for another mobile phone, the mobile phone serves as an AP.

The AP and the non-AP STA may be devices applied in vehicle-to-everything; internet of things nodes, sensors, and the like in internet of things (Internet Of Things, IoT); intelligent cameras, intelligent remote controls, intelligent water meters, intelligent electricity meters, and the like in smart home; and sensors and the like in smart city.

In some embodiments, the non-AP STA may support an 802.11be standard. The non-AP STA may also support a plurality of current and future wireless local area network (wireless local area networks, WLAN) standards of an 802.11 family, such as 802.11ax, 802.11ac, 802.11n, 802.11g, 802.11b, and 802.11a.

In some embodiments, the AP may be a device that supports the 802.11be standard. The AP may alternatively be a device that supports a plurality of current and future WLAN standards of the 802.11 family, such as 802.11ax, 802.11ac, 802.11n, 802.11g, 802.11b, and 802.11a.

In embodiments of this application, the STA may be a device that supports a WLAN or Wi-Fi technology, such as a mobile phone (Mobile Phone), a tablet computer (Pad), a computer, a virtual reality (Virtual Reality, VR) device, an augmented reality (Augmented Reality, AR) device, a wireless device in industrial control (industrial control), a set-top box, a wireless device in self-driving (self driving), a vehicle-mounted communications device, a wireless device in remote medical (remote medical), a wireless device in smart grid (smart grid), a wireless device in transportation safety (transportation safety), a wireless device in smart city (smart city), a wireless device in smart home (smart home), a wireless communications chip, an ASIC, a SoC, or the like.

Frequency bands supported in the WLAN technology may include but are not limited to a low frequency band (for example, 2.4 GHz, 5 GHz, or 6 GHz) and a high frequency band (for example, 45 GHz or 60 GHz).

FIG. 1 exemplarily shows one AP STA and two non-AP STAs. Optionally, the communications system 100 may include a plurality of AP STAs and another quantity of non-AP STAs. This is not limited in embodiments of this application.

It should be understood that in embodiments of this application, a device having a communication function in a network or a system may be referred to as a communications device. The communications system 100 shown in FIG. 1 is used as an example. A communications device may include the access point 110 and the stations 120 that have a communication function. The access point 110 and the stations 120 may be specific devices described above. Details are not described herein again. The communications device may further include another device in the communications system 100, such as a network controller, a gateway, or another network entity, which is not limited in embodiments of this application.

It should be understood that the terms "system" and "network" may often be used interchangeably in this specification. In this specification, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

It should be understood that, the "indication" mentioned in embodiments of this application may be a direct indication or an indirect indication, or indicate an association relationship. For example, if A indicates B, it may mean that A directly indicates B, for example, B can be obtained from A. Alternatively, it may mean that A indicates B indirectly, for example, A indicates C, and B can be obtained from C. Alternatively, it may mean that there is an association between A and B.

In descriptions of embodiments of this application, the term "corresponding" may mean that there is a direct or indirect correspondence between two elements, or that there is an association relationship between two elements, or that there is a relationship of "indicating" and "being indicated", "configuring" and "being configured", or the like.

In embodiments of this application, the "predefining" may be implemented in a manner in which corresponding code, a table, or other related information used for indication is pre-stored in a device (for example, including an access point and a station). A specific implementation is not limited in this application. For example, predefined may indicate being defined in a protocol.

To facilitate understanding of the technical solutions of embodiments of this application, relevant terms of this application are explained below.

Association identifier (Association Identifier, AID) is used to identify a terminal that has established an association with an access point.

Medium access control (Medium Access Control, MAC) is a logical layer that implements medium access control functions, and is a short name of medium access control address.

Transmission opportunity (Transmission Opportunity, TXOP) refers to a period of time during which a terminal with the transmission opportunity may actively initiate one or more transmissions.

To facilitate understanding of the technical solutions in embodiments of this application, uplink orthogonal frequency division multiple access based random access (uplink orthogonal frequency division multiple access based random access, UORA) related to this application is described.

An AP should indicate a range of an orthogonal frequency division multiple access (Orthogonal Frequency Division Multiple Access, OFDMA) contention window (OFDMA Contention Window, OCW) in UORA parameter set elements, so that a STA initiates random access upon receiving a trigger frame.

A non-AP high efficiency (High Efficiency, HE) STA should maintain an internal OCW and an internal OFDMA back-off (OFDMA Back-off, OBO) counter. OCW is an integer with a value ranging from OCWmin to OCWmax.

A size of all random access resource units (Random Access Resource Unit, RA-RU) in a UORA parameter set should be the same as an RA-RU size indicated in a resource allocation (RU Allocation) subfield in a user information (User Info) field. A non-AP HE STA should determine a total quantity of eligible RA-RUs in a contiguous set from a quantity of RA-RU subfields in the User Info field corresponding to an eligible RA-RU, excluding RA-RUs that are not within its operating bandwidth.

If an HE STA has a pending (pending) frame for the AP upon the reception of a trigger frame containing at least one eligible RA-RU and if an OBO counter of the HE STA is not greater than a quantity of eligible RA-RUs in a trigger frame from that AP, then the HE STA sets its OBO counter to zero and randomly select one of eligible RA-RUs to be considered for transmission. Otherwise, the HE STA decrements its OBO counter by the quantity of eligible RA-RUs in the trigger frame.

For the HE STA or AP, a maximum quantity of available RUs of various types under each bandwidth are as shown in Table 1.

**Table 1**

| RU type | CBW20 | CBW40 | CBW80 | CBW80+80 and CBW160 |
|---|---|---|---|---|
| 26-tone RU | 9 | 18 | 37 | 74 |
| 52-tone RU | 4 | 8 | 16 | 32 |
| 106-tone RU | 2 | 4 | 8 | 16 |
| 242-tone RU | 1 | 2 | 4 | 8 |
| 484-tone RU | N/A | 1 | 2 | 4 |
| 996-tone RU | N/A | N/A | 1 | 2 |
| 2×996 tone RU | N/A | N/A | N/A | 1 |

For an (Extreme High Throughput, EHT) STA or AP, a maximum quantity of available RUs of various types under each bandwidth are as shown in Table 2.

**Table 2**

| RU type | CBW20 | CBW40 | CBW80 | CBW80+80 and CBW160 | CBW320 |
|---|---|---|---|---|---|
| 26-tone RU | 9 | 18 | 36 | 72 | 148 |
| 52-tone RU | 4 | 8 | 16 | 32 | 64 |
| 106-tone RU | 2 | 4 | 8 | 16 | 32 |
| 242-tone RU | 1 | 2 | 4 | 8 | 16 |
| 484-tone RU | N/A | 1 | 2 | 4 | 8 |
| 996-tone RU | N/A | N/A | 1 | 2 | 3 |
| 2×996 tone RU | N/A | N/A | N/A | 1 | 2 |
| 4×996 tone RU | N/A | N/A | N/A | N/A | 1 |

To facilitate understanding of the technical solutions in embodiments of this application, a buffer status report (Buffer Status Report, BSR) trigger frame related to this application is described.

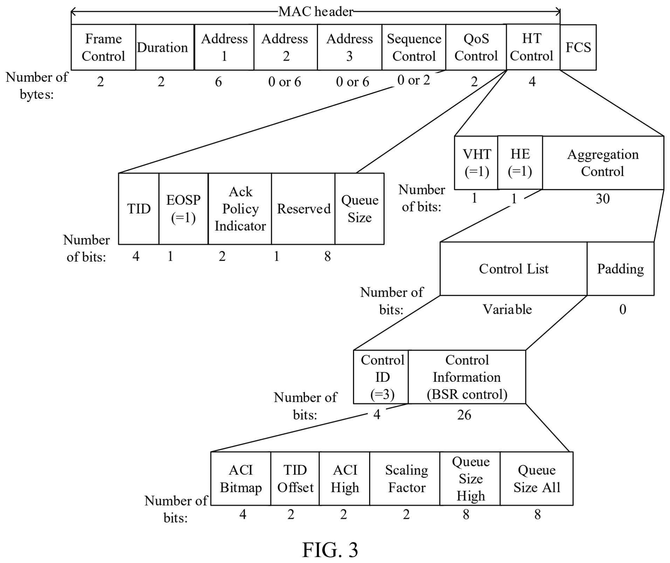

An access point transmits a buffer status report poll (Buffer Status Report Poll, BSRP) trigger frame to acquire buffer status reports of a plurality of station devices. A station device indicates, in a QoS control (QoS Control) field of at least one frame (for example, a quality of service (Quality of Service, QoS) null (Null) frame) included in a physical layer protocol data unit (Physical Layer Protocol Data Unit, PPDU) in response, an amount of data in a buffer queue corresponding to at least one traffic identifier (traffic identifier, TID) of the station device; and also indicates, in a buffer status report control (BSR Control) subfield of an aggregation control (A-Control) subfield of a high efficiency variant (HE variant) in a high throughput control (HT Control) field of at least one QoS Null frame, an amount of data in a buffer queue corresponding to at least one of access categories (Access Category, AC) of the station device. FIG. 2 is a schematic diagram of a format of a BSRP trigger frame. FIG. 3 is a schematic diagram of a format of a QoS Null frame. In the example shown in FIG. 3, an access category index (Access Category Index, ACI) bitmap (ACI bitmap) field, a TID offset (delta TID) field, and a queue size all (Queue Size All) field are used for feedback of buffer status information of a plurality of ACs, an ACI high (ACI high) field and a queue size high (Queue Size High) field are used for feedback of buffer status information of a single AC, and a scaling factor (Scaling factor) field is used to indicate a size of a buffer unit.

To facilitate understanding of the technical solutions in embodiments of this application, a null data physical layer protocol data unit feedback report poll (NDP Feedback Report Poll, NFRP) trigger frame related to this application is described.

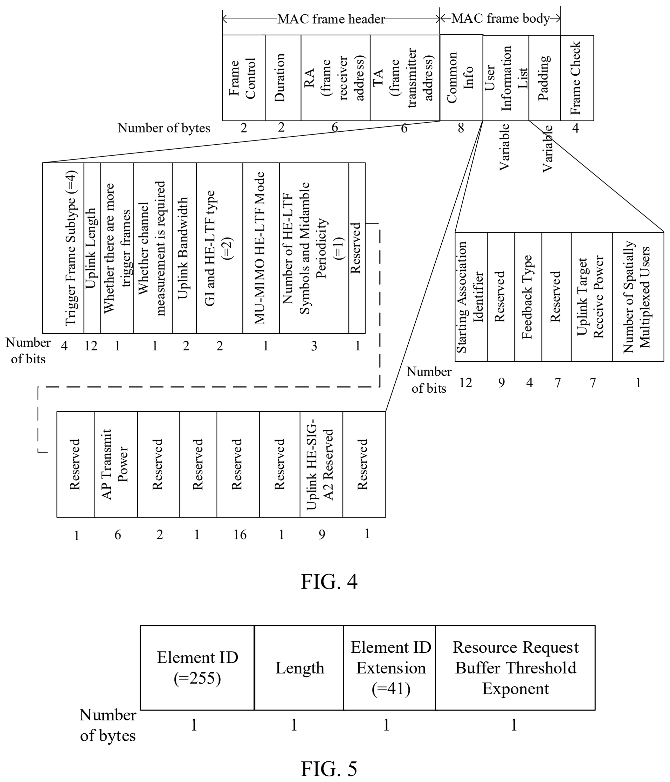

The access point transmits an NFRP trigger frame to acquire null data physical layer protocol data unit feedback reports of a plurality of station devices. After receiving the NFRP trigger frame, the station device transmits a null data physical layer protocol data unit (Null Data PPDU, NDP) as a response. When a quantity of bytes of data buffered in the station device is greater than or equal to a resource request buffer threshold (resource request buffer threshold) indicated by the access point, a value of a feedback status (FEEDBACK_STATUS) (the transmission variable is to be used to modulate a subcarrier for transmitting a long training field (long training field, LTF) of an NDP) of the station device is 1; otherwise, a value of FEEDBACK_STATUS of the station device is 0. The resource request buffer threshold is previously indicated by the access point, for example, indicated in a null data physical layer protocol data unit feedback report parameter set (NDP Feedback Report Parameter Set) element in at least one of the following frames: a beacon frame (Beacon), a probe response frame (Probe Response), an association response frame (Association Response), or a reassociation response frame (Reassociation Response). Alternatively, in a case in which no indication is received, the resource request buffer threshold is set to a default value of 256 bytes. FIG. 4 is a schematic diagram of a format of an NFRP trigger frame. FIG. 5 is a schematic diagram of a format of an NDP feedback report parameter set element. A resource request buffer threshold exponent (Resource Request Buffer Threshold Exponent) field is used to calculate a buffer threshold between different resource requests.

In some scenarios, the station device may be in an active mode, or may be in a power save mode. In the power save mode, the station device may be in a doze state or in an awake state. When the station device is in the active mode or in the awake state in the power save mode, the station device may transmit and receive data. When the station device is in the doze state in the power save mode, the station device cannot transmit and receive data.

In some scenarios, an AP or a STA may transmit non-latency-sensitive data in an obtained TXOP. During transmission of the data, non-predictable latency-sensitive data may occur, and a current mode of a target recipient device of the latency-sensitive data is uncertain. In this case, how to transmit latency-sensitive data is an urgent problem to be solved.

To facilitate understanding of the technical solutions in embodiments of this application, the following describes the technical solutions in this application in detail by using specific embodiments. The following related technologies, as optional solutions, may be randomly combined with the technical solutions of embodiments of this application, all of which fall within the protection scope of embodiments of this application. Embodiments of this application include at least part of the following content.

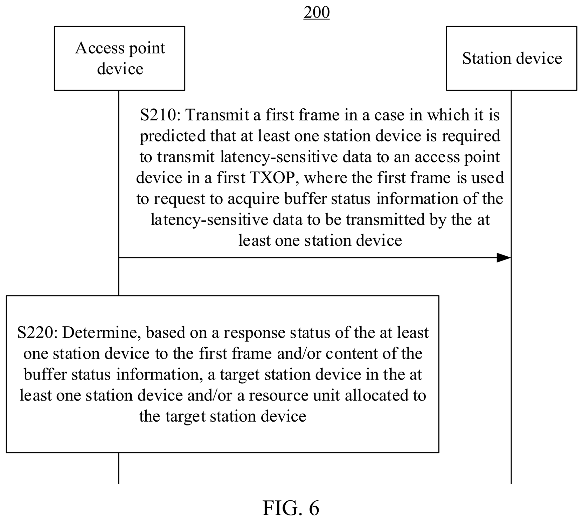

FIG. 6 is a schematic interaction diagram of a wireless communication method 200 according to an embodiment of this application. As shown in FIG. 6, the method 200 includes the following content.

In S210, in a case in which an access point device predicts that at least one station device is required to transmit latency-sensitive data to the access point device in a first TXOP, a first frame is transmitted to the at least one station device, where the first frame is used to request to acquire buffer status information of the latency-sensitive data to be transmitted by the at least one station device or trigger the at least one station device to report buffer status information of the latency-sensitive data to be transmitted.

In S220, a target station device in the at least one station device and/or a resource unit allocated to the target station device is determined based on a response status of the at least one station device to the first frame and/or content of the buffer status information, where the target station device is a station device that is in the at least one station device and that is able to use the first TXOP to transmit the latency-sensitive data to the access point device.

In some embodiments, the access point device is a holder (holder) of the first TXOP, and the first TXOP is acquired by the access point device for transmitting non-latency-sensitive data to a first station device.

In some embodiments, in the first TXOP, the access point device uses a request to send (request to send, RTS)/clear to send (clear to send, CTS) frame exchange as an initial frame exchange, or uses a multi-user request-to-send (multi-user Request-To-Send, MU-RTS Trigger)/CTS frame exchange as an initial frame exchange.

In some embodiments, the latency-sensitive data may include traffic data identified by a restricted target wake time traffic identifier (restricted target wake time traffic identifier, R-TWT TID) and/or traffic data identified by a stream classification service identifier (stream classification service identifier, SCS ID).

In some embodiments, non-latency-sensitive data may refer to traffic data neither identified by an R-TWT TID nor identified by an SCS ID.

In some embodiments, latency-sensitive data is also referred to as latency-sensitive traffic, a latency-sensitive service, low-latency data, low-latency traffic, or a low-latency service. Non-latency-sensitive data is also referred to as non-latency-sensitive traffic, a non-latency-sensitive service, non-low-latency data, non-low-latency traffic, or a non-low-latency service.

In some embodiments, the latency-sensitive data may be non-predictable, or event-driven, for example, traffic data generated by instant message interaction of a user or traffic data generated by a sensor.

In some embodiments, the access point device may determine, based on historical data transmission information within a basic service set (Basic Service Set, BSS) and/or a mode of a station device in the BSS, whether a station device is temporarily in a need to transmit latency-sensitive data to the access point device. That is, the at least one station device may be determined based on historical data transmission information within the BSS and/or a mode of a station device in the BSS.

In some embodiments, the at least one station device may include at least one of the following:
a station device that has historically transmitted latency-sensitive data;
a station device that has historically established a latency-sensitive data flow by using a stream classification service; or
a station device on which a low-latency priority mode (or referred to as a latency-sensitive priority mode) is enabled, where when the station device is in the low-latency priority mode, latency-sensitive data is transmitted with priority.

In some embodiments, the low-latency priority mode is enabled on the target station device.

In some embodiments of this application, S220 may include:
determining, based on the response status of the at least one station device to the first frame, the target station device in the at least one station device.

For example, the target station device is a station device that is in the at least one station device and that responds to the first frame. Alternatively, the target station device is a station device that is in the at least one station device and that feeds back buffer status information to the access point device.

In some embodiments, when the access point device transmits the first frame, the target station device is in the active mode, or is in the power save mode and in the awake state. That is, the target station device can receive the first frame, so that the target station device can feed back buffer status information to the access point device.

In some embodiments, the target station device is a station device that actually has latency-sensitive data to be transmitted to the access point device.

In some embodiments of this application, S220 may include:
determining, based on content of buffer status information of to-be-transmitted latency-sensitive data that is fed back by a target station device in the at least one station device, a resource unit allocated to the target station device.

In some embodiments, the buffer status information of the to-be-transmitted latency-sensitive data that is fed back by the target station device may be:
an amount of data in a buffer queue corresponding to the latency-sensitive data of the target station device, or a level corresponding to an amount of data, where the level corresponding to the amount of data may be determined based on a buffer threshold (for example, a resource request buffer threshold), for example, whether the amount of data is greater than the buffer threshold.

Therefore, in embodiments of this application, in allocation of a resource unit to a station device that is predicted to have latency-sensitive data, a state or a mode of the station device is considered. For example, no resource unit is allocated to a station device that is in the doze state in the power save mode, which is conducive to avoiding a problem of resource waste caused by allocating a resource unit to such a station device that fails to transmit data due to that the station device is in the doze state. In addition, in allocation of a resource unit to a station device, a data amount of latency-sensitive data to be transmitted by the station device is considered, which is conducive to meeting an actual requirement of the station device for a size of a resource unit, thereby avoiding a problem that resource allocation cannot meet an actual requirement of the station device due to that resources are equally allocated based on a quantity of station devices, which in turn affects latency-sensitive data transmission.

In some embodiments, a resource unit allocated by the access point device to the target station device overlaps with a time domain resource in which the first TXOP is located. That is, the access point device may allocate a resource unit in the first TXOP to the target station device for transmission of latency-sensitive data, or the access point device may transmit latency-sensitive data in a TXOP owned by the access point device by changing a purpose of the TXOP. Therefore, the target station device may transmit latency-sensitive data to the access point device in a TXOP used for transmitting non-latency-sensitive data between the access point device and the first station device, which is conducive to ensuring timely and reliable transmission of latency-sensitive data.

In some embodiments, when a time length of the first TXOP is greater than a first threshold (for example, greater than 500 microseconds), the target station device is allowed to preempt a TXOP used for transmitting non-latency-sensitive data between the access point device and the first station device, to transmit latency-sensitive data to the access point device in the TXOP. That is, in a case in which duration of the first TXOP is greater than the first threshold, S210 and S220 are performed.

In some embodiments, the first frame includes first indication information, and the first indication information is used to indicate a data type corresponding to the buffer status information requested to be acquired, or the first indication information is used to indicate a data type corresponding to the buffer status information that triggers to be reported.

That is, the first indication information may indicate which data type of buffer status information is to be reported by the station device.

Specifically, the first indication information is used to indicate that a data type corresponding to buffer status information requested to be acquired is latency-sensitive data, or the first indication information is used to indicate that a data type corresponding to buffer status information that triggers to be reported is latency-sensitive data.

In some embodiments of this application, the method 200 further includes:
receiving, by the access point device, a second frame transmitted by the at least one station device (for example, the target station device), where the second frame includes buffer status information corresponding to latency-sensitive data to be transmitted by the station device.

In some embodiments of this application, the method 200 further includes:
transmitting, by the access point device, a third frame to the target station device, where the third frame is used to indicate a resource unit allocated by the access point device to the target station device.

In some embodiments, the third frame is a basic trigger frame (Basic Trigger frame).

In some embodiments of this application, the method 200 further includes:
transmitting, by the target station device, latency-sensitive data to the access point device by using the resource unit allocated by the access point device to the target station device.

In some embodiments, the first frame may be an existing frame in a communications system, or a new frame may be defined and used to request to acquire buffer status information of latency-sensitive data to be transmitted by the station device, or trigger the station device to report buffer status information of latency-sensitive data to be transmitted, which is not limited in this application.

In some embodiments, the first frame is a trigger frame. For example, an existing trigger frame may be used, or a new trigger frame may be defined and used to request to acquire buffer status information of latency-sensitive data to be transmitted by the station device, or trigger the station device to report buffer status information of latency-sensitive data to be transmitted, which is not limited in this application.

In some embodiments, the first frame includes but is not limited to at least one of the following frames:
a buffer status report poll BSRP trigger frame, or a null data physical layer protocol data unit feedback report poll NFRP trigger frame.

In some embodiments, the first indication information may be carried in a reserved bit in the first frame.

For example, a reserved bit in a common information (Common Info) field of the BSRP trigger frame is used to carry the first indication information, or a reserved bit in another field of the BSRP trigger frame may be used to carry the first indication information. This is not limited in this application.

In some embodiments, the second frame may be an existing frame, or a new frame may be defined and used to report buffer status information of latency-sensitive data to be transmitted by the station device, which is not limited in this application.

By way of example rather than limitation, the second frame includes a quality of service null QoS Null frame and/or an NDP frame.

In some embodiments, the second frame is a quality of service null QoS Null frame, and at least one of a QoS control field of the QoS Null frame or a BSR Control field in an A-Control subfield of an HE variant of an HT Control field is used to indicate a data amount of latency-sensitive data to be transmitted by the station device.

In some embodiments, the second frame is an NDP frame, and a transmission parameter of the NDP frame is used to determine whether a data amount of latency-sensitive data to be transmitted is greater than the buffer threshold. When a quantity of bytes of latency-sensitive data buffered in the target station device is greater than or equal to the buffer threshold, a value of a feedback status (FEEDBACK_STATUS) of the target station device is 1; otherwise, a value of FEEDBACK_STATUS of the target station device is 0. The feedback status is used to modulate a subcarrier for transmitting the NDP. Therefore, after receiving the NDP frame, the access point device may determine, based on the subcarrier for transmitting the NDP, whether a data amount of latency-sensitive data to be transmitted by the target station device is greater than the buffer threshold.

In some embodiments, the buffer threshold may be indicated by the access point device, for example, the buffer threshold may be indicated in a null data physical layer protocol data unit feedback report parameter set (NDP Feedback Report Parameter Set) element in at least one of the following frames: a beacon frame (Beacon), a probe response frame (Probe Response), an association response frame (Association Response), or a reassociation response frame (Reassociation Response). Alternatively, in a case in which no indication is received, the buffer threshold is set to a default value of 256 bytes.

In some embodiments, when the access point device requests, by using a BSRP trigger frame, to acquire buffer status information of latency-sensitive data to be transmitted by a station device, the target station device may transmit a QoS Null frame to the access point device, carrying the buffer status information of the latency-sensitive data to be transmitted. For example, the target station device includes at least one QoS Null frame in a PPDU transmitted to the access point device, where an amount of data in a buffer queue corresponding to at least one traffic identifier TID of the target station device is indicated in a QoS Control field (QoS Control) field of the QoS Null frame; and an amount of data in a buffer queue corresponding to at least one AC of the target station device is indicated in a BSR Control field in an A-Control subfield of an high efficiency variant (HE variant) of a high throughput control (HT Control) field in the at least one QoS Null frame. A data amount of latency-sensitive data may include an amount of data in a buffer queue corresponding to a TID and/or an amount of data in a buffer queue corresponding to an AC.

In some embodiments, when the access point device requests, by using an NFRP trigger frame, to acquire buffer status information of latency-sensitive data to be transmitted by a station device, the target station device may transmit an NDP frame to the access point device, carrying the buffer status information of the latency-sensitive data to be transmitted. For example, FEEDBACK_STATUS of the target station device is set based on a data amount of the latency-sensitive data, and a subcarrier for transmitting the NDP is further modulated based on FEEDBACK_STATUS of the target station device.

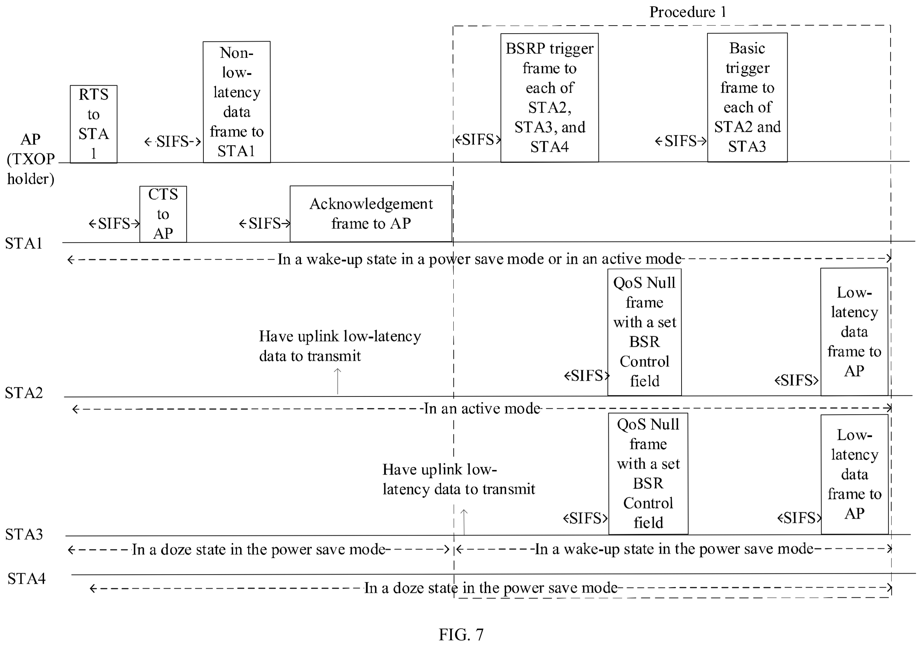

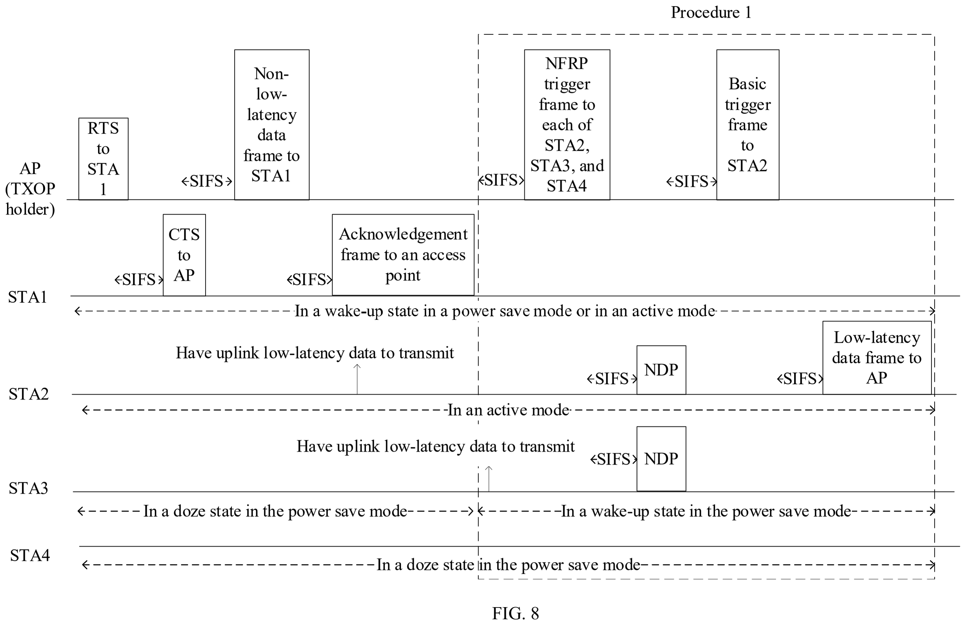

With reference to specific examples shown in FIG. 7 and FIG. 8, the following describes a TXOP preemption method according to an embodiment of this application.

In the example shown in FIG. 7, an AP is a holder of a TXOP, and in the TXOP, the AP may use an RTS/CTS frame exchange as an initial frame exchange, or may use an MU-RTS Trigger/CTS frame exchange as an initial frame exchange. Therefore, a station device that is not a target station of the RTS or MU-RTS Trigger may fail to receive a frame from the AP due to that the station device is in the power save mode and in the doze state.

Data transmitted by the AP to a STA 1 in the TXOP is non-latency-sensitive data. When the AP predicts that a STA 2, a STA 3, and a STA 4 has latency-sensitive data to be transmitted to the AP (for a specific prediction method, reference is made to related descriptions in the foregoing embodiment), the following procedure 1 may be performed.

The AP transmits a BSRP trigger frame to the STA 2, the STA 3, and the STA 4 to acquire buffer status information of latency-sensitive data to be transmitted by the STA 2, the STA 3, and the STA 4.

Further, since the STA 2 is in the active mode and thus can receive the BSRP trigger frame, the STA 2 may reply to the AP with a QoS Null frame, where at least one of a BSR Control field or a QoS Control field of the QoS Null frame is used to indicate buffer status information of latency-sensitive data to be transmitted by the STA 2.

Since the STA 3 is in the power save mode and in the awake state, and thus can receive the BSRP trigger frame, the STA 3 may reply to the AP with a QoS Null frame, where at least one of a BSR Control field or a QoS Control field of the QoS Null frame is used to indicate buffer status information of latency-sensitive data to be transmitted by the STA 3.

Since the STA 4 is in the power save mode and is in the doze state, and thus fails to receive the BSRP trigger frame, the STA 4 does not relay to the AP with buffer status information of latency-sensitive data to be transmitted by the STA 4.

That is, in this example, the target station device is the STA 2 and the STA 3. Further, the AP may allocate a resource unit to each of the STA 2 and the STA 3, for example, resource units in the TXOP hold by the AP, and then transmit a basic trigger frame to each of the STA 2 and the STA 3 to indicate resource units allocated by the AP to the STA 2 and the STA 3, respectively. Then, after receiving an SIFS of the basic trigger frame, the STA 2 and the STA 3 may transmit latency-sensitive data to the AP by using the resource units allocated by the AP.

In the example shown in FIG. 8, an AP is a holder of a TXOP, and in the TXOP, the AP may use an RTS/CTS frame exchange as an initial frame exchange, or may use an MU-RTS Trigger/CTS frame exchange as an initial frame exchange. Therefore, a station device that is not a target station of the RTS or MU-RTS Trigger may fail to receive a frame from the AP due to that the station device is in the power save mode and in the doze state.

Data transmitted by the AP to a STA 1 in the TXOP is non-latency-sensitive data. When the AP predicts that a STA 2, a STA 3, and a STA 4 has latency-sensitive data to be transmitted to the AP (for a specific prediction method, reference is made to related descriptions in the foregoing embodiment), the following procedure 1 may be performed.

The AP may transmit an NFRP trigger frame to each of the STA 2, the STA 3, and the STA 4 to acquire buffer status information of latency-sensitive data to be transmitted by the STA 2, the STA 3, and the STA 4.

Further, since the STA 2 is in the active mode and thus can receive the NFRP trigger frame, the STA 2 may reply to the AP with an NDP frame, where a transmission parameter of the NDP frame is used to determine buffer status information of latency-sensitive data to be transmitted by the STA 2.

Since the STA 3 is in the power save mode and in the awake state, and thus can receive the NFRP trigger frame, the STA 3 may reply to the AP with an NDP frame, where a transmission parameter of the NDP frame is used to determine buffer status information of latency-sensitive data to be transmitted by the STA 3.

Since the STA 4 is in the power save mode and in the doze state, and thus fails to receive the NFRP trigger frame, the STA 4 does not reply to the AP with buffer status information of latency-sensitive data to be transmitted by the STA 4.

That is, in this example, the target station device is the STA 2 and the STA 3. Further, the AP may allocate a resource unit to each of the STA 2 and the STA 3, for example, resource units in the TXOP hold by the AP, and then transmit a basic trigger frame to each of the STA 2 and the STA 3 to indicate resource units allocated by the AP to the STA 2 and the STA 3, respectively. Then, after receiving an SIFS of the basic trigger frame, the STA 2 and the STA 3 may transmit latency-sensitive data to the AP by using the resource units allocated by the AP.

In some embodiments, a low-latency priority mode, also referred to as a BSS low-latency priority mode, is enabled on the access point device, and in a case in which the low-latency priority mode is enabled, the access point device prioritizes the transmission of latency-sensitive data, for example, transmits latency-sensitive data by performing the foregoing procedure.

In some embodiments, whether to enable the low-latency priority mode on the access point device is independently determined by the access point device, for example, based on a transmission status of latency-sensitive data within a BSS, or is set by a user.

In some embodiments of this application, the access point device may notify a station device within the BSS of status information of the low-latency priority mode on the access point device, such as whether the low-latency priority mode is enabled (in other words, whether the low-latency priority mode is in an enabled state or a disabled state), duration for which the low-latency priority mode is enabled, and the like.

For example, the access point device transmits a fourth frame, where the fourth frame is used to notify status information of the low-latency priority mode on the access point device.

In some embodiments, the fourth frame includes at least one of the following:
a management frame (for example, Beacon), a probe response (Probe Response) frame, an association response (Association Response) frame, a reassociation response (Reassociation Response) frame, or an operation mode notification (Operation Mode Notification) frame.

In some embodiments, the low-latency priority mode is enabled on the at least one station device, and in a case in which the low-latency priority mode is enabled, the at least one station device prioritizes the transmission of latency-sensitive data.

In some embodiments, in a case in which the low-latency priority mode is enabled on a station device, the station device is always in the active mode, or is always in the awake state in the power save mode.

In some embodiments, whether to enable the low-latency priority mode on the station device is determined by the station device based on, for example, a transmission status of latency-sensitive data of the station device, or is set by a user, or is determined based on a request from the access point device.

For example, the access point device transmits a fifth frame to the station device, where the fifth frame is used to request the station device to enable or disable the low-latency priority mode. The station device may accept or reject the request.

In some embodiments, the fifth frame is a management frame.

In some embodiments, the method 200 further includes:
receiving, by the access point device, a sixth frame transmitted by the station device, where the sixth frame is used to notify status information of the low-latency priority mode on the station device, for example, whether the low-latency priority mode is enabled (in other words, whether the low-latency priority mode is in an enabled state or a disabled state), duration for which the low-latency priority mode is enabled, and the like.

In some embodiments, the sixth frame is a management frame.

In conclusion, in embodiments of this application, in a transmission opportunity hold by an access point device for transmitting non-latency-sensitive data, if the access point device predicts that at least one station device is required to transmit latency-sensitive data to the access point device, the access point device may acquire buffer status information of the latency-sensitive data of the at least one station device, and further allocate a resource unit based on the buffer status information of the latency-sensitive data of the at least one station device, thereby achieving proper allocation of resource units. Furthermore, a station device that has latency-sensitive data may transmit the latency-sensitive data by using the resource unit allocated by the access point device, thereby ensuring timely and reliable transmission of latency-sensitive data.

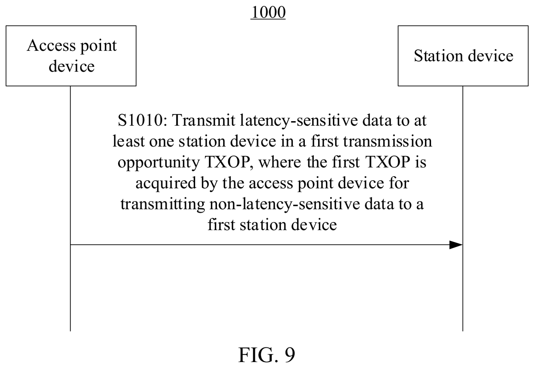

FIG. 9 is a schematic interaction diagram of a wireless communication method 1000 according to another embodiment of this application. As shown in FIG. 9, the method 1000 includes the following content.

In S1010, in a case in which an access point device has latency-sensitive data to be transmitted to at least one station device, the access point device transmits the latency-sensitive data to the at least one station device in a first transmission opportunity TXOP based on a mode or a state of the at least one station device.

It should be understood that, in the method 1000, for specific descriptions of latency-sensitive data and non-latency-sensitive data, reference is made to related descriptions in the method 200. For brevity, details are not described herein again.

In some embodiments, the access point device is a holder (holder) of the first TXOP, and the first TXOP is acquired by the access point device for transmitting non-latency-sensitive data to a first station device.

In some embodiments, in the first TXOP, the access point device uses a request to send (request to send, RTS)/clear to send (clear to send, CTS) frame exchange as an initial frame exchange, or uses a multi-user request-to-send trigger (multi-user Request-To-Send, MU-RTS Trigger)/CTS frame exchange as an initial frame exchange.

In some embodiments, the mode or state of the station device may include at least one of the following:
the station device is in an active mode (active mode), the station device is in a power save mode (PS mode), the station device is in a power save mode and in an awake state, and the station device is in a power save mode and in a doze state.

In some embodiments, when a time length of the first TXOP is greater than a first threshold (for example, greater than 500 microseconds), the access point device preempts a TXOP used for transmitting non-latency-sensitive data between the access point device and a first station device, to transmit latency-sensitive data to another station device in the TXOP. That is, in a case in which duration of the first TXOP is greater than the first threshold, S1010 is performed.

In some embodiments, S1010 includes:
determining, based on whether the at least one station device is in the active mode or in the power save mode, whether to transmit an RTS frame and/or an MU-RTS trigger frame to the at least one station device.

For example, if the at least one station device is in the active mode (for example, a power management (Power Management) field in a frame control (Frame Control) field of a data frame that is last transmitted by the at least one station device to the access point device is set to 1), the access point device may not transmit an RTS frame and/or an MU-RTS trigger frame to the at least one station device, but directly transmit downlink latency-sensitive data to the at least one station device.

For another example, if the at least one station device is in the power save mode (for example, a power management (Power Management) field in a frame control (Frame Control) field of a data frame that is last transmitted by the at least one station device to the access point device is set to 0), the access point device may transmit an RTS frame and/or an MU-RTS trigger frame to the at least one station device, and then transmit downlink latency-sensitive data to the at least one station device.

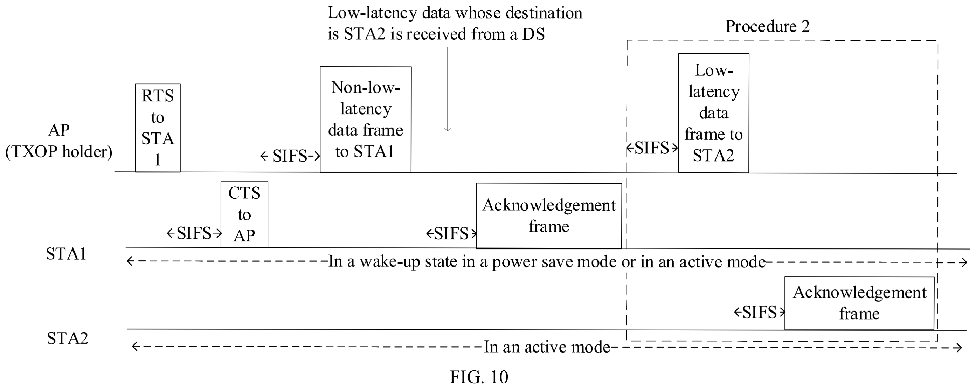

With reference to specific examples shown in FIG. 10 to FIG. 12, the following describes a TXOP preemption method according to an embodiment of this application.

In the examples shown in FIG. 10 to FIG. 12, an AP is a holder of a TXOP, and in the TXOP, the AP may use an RTS/CTS frame exchange as an initial frame exchange, or may use an MU-RTS Trigger/CTS frame exchange as an initial frame exchange. Therefore, a station device that is not a target station of the RTS or MU-RTS Trigger may fail to receive a frame from the AP due to that the station device is in the power save mode and in the doze state.

In the example shown in FIG. 10, data transmitted by the AP to a STA 1 in the TXOP is non-latency-sensitive data. When receiving latency-sensitive data whose destination is a STA 2 from a distribution system (distribution system, DS), the AP may perform the following procedure 2.

Since the STA 2 is in the active mode, the AP may directly transmit, to the STA 2, a data frame that carries latency-sensitive data. Further, the STA 2 may reply to the AP with an acknowledgment frame.

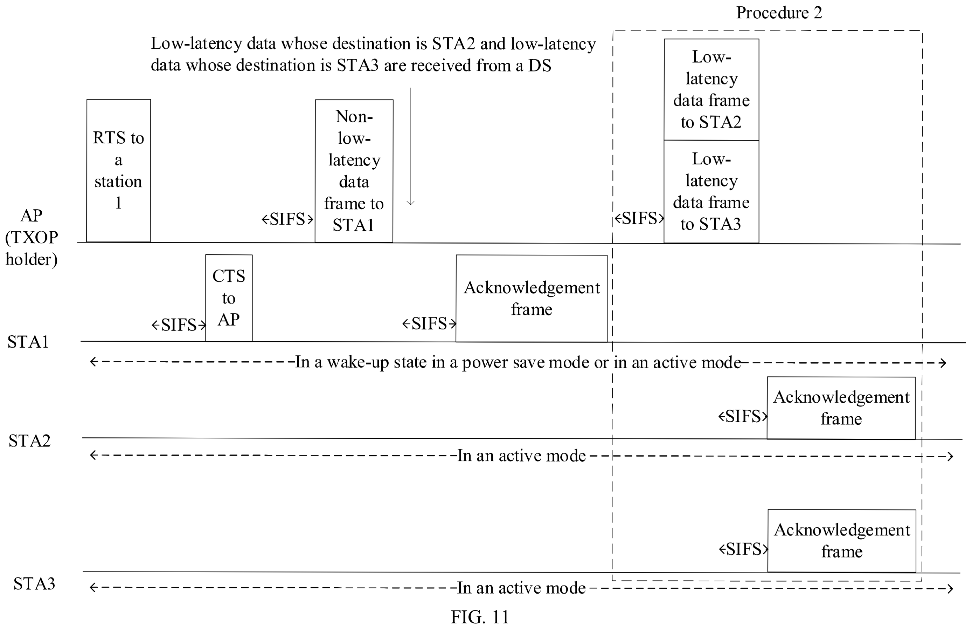

In the example shown in FIG. 11, data transmitted by the AP to a STA 1 in the TXOP is non-latency-sensitive data. When receiving latency-sensitive data whose destination is a STA 2 and latency-sensitive data whose destination is a STA 3 from a DS, the AP may perform the following procedure 2.

Since the STA 2 and the STA 3 are in the active mode, the AP may directly transmit, to the STA 2 and the STA 3, data frames carrying latency-sensitive data. Further, the STA 2 and the STA 3 may reply to the AP with acknowledgment frames.

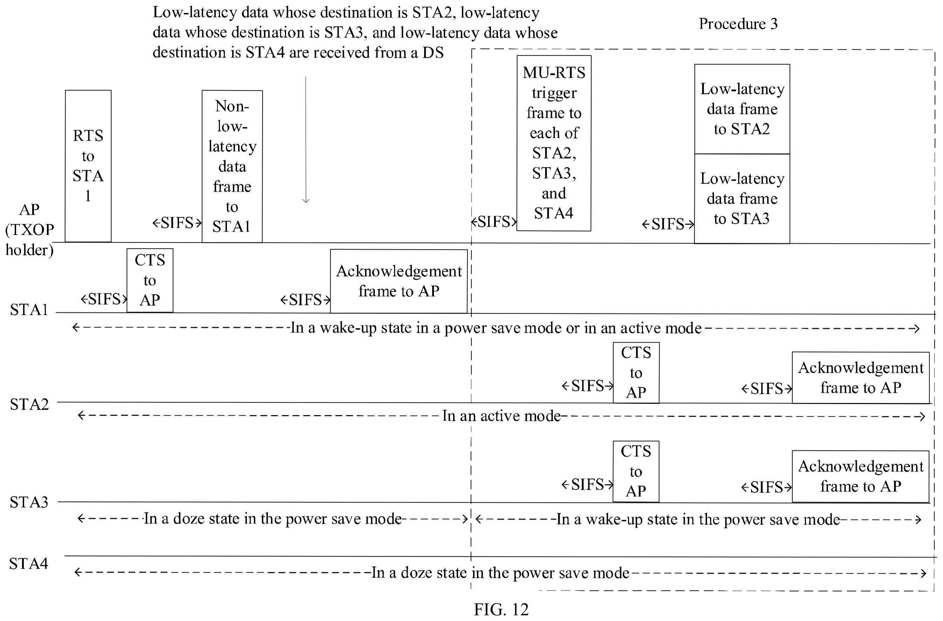

In the example shown in FIG. 12, data transmitted by the AP to a STA 1 in the TXOP is non-latency-sensitive data. When receiving latency-sensitive data whose destination is a STA 2, latency-sensitive data whose destination is a STA 3, and latency-sensitive data whose destination is a STA 4 from a DS, the AP may perform the following procedure 3.

Since the STA 2, the STA 3, and the STA 4 are in the power save mode and in the doze state, the STA 3 and the STA 4 fail to receive a frame from the AP. Therefore, the AP may first transmit an MU-RTS Trigger to the STA 2, the STA 3, and the STA 4. Further, the STA 2 and the STA 3 may reply to the AP with a CTS frame. After receiving the CTS frame, the AP transmits, to the STA 2 and the STA 3, data frames carrying latency-sensitive data. Further, the STA 2 and the STA 3 may reply to the AP with acknowledgement frames.

In some embodiments, a low-latency priority mode, also referred to as a BSS low-latency priority mode, is enabled on the access point device, and in a case in which the low-latency priority mode is enabled, the access point device prioritizes the transmission of latency-sensitive data, for example, transmits latency-sensitive data by performing the foregoing procedure.

In some embodiments, whether to enable the low-latency priority mode on the access point device is independently determined by the access point device, for example, based on a transmission status of latency-sensitive data within a BSS, or is set by a user.

In some embodiments of this application, the access point device may notify a station device within the BSS of status information of the low-latency priority mode on the access point device, such as whether the low-latency priority mode is enabled (in other words, whether the low-latency priority mode is in an enabled state or a disabled state), duration for which the low-latency priority mode is enabled, and the like. For example, the access point device transmits a fourth frame, where the fourth frame is used to notify status information of the low-latency priority mode on the access point device.

In some embodiments, the fourth frame includes at least one of the following:
a management frame (for example, Beacon), a probe response (Probe Response) frame, an association response (Association Response) frame, a reassociation response (Reassociation Response) frame, or an operation mode notification (Operation Mode Notification) frame.

In some embodiments, the low-latency priority mode is enabled on the at least one station device, and in a case in which the low-latency priority mode is enabled, the at least one station device prioritizes transmission of latency-sensitive data.

In some embodiments, in a case in which the low-latency priority mode is enabled on a station device, the station device is always in the active mode, or is always in the awake state in the power save mode.

In some embodiments, whether to enable the low-latency priority mode on the station device is determined by the station device based on, for example, a transmission status of latency-sensitive data of the station device, or is set by a user, or is determined based on a request from the access point device.

For example, the access point device transmits a fifth frame to the station device, where the fifth frame is used to request the station device to enable or disable the low-latency priority mode. The station device may accept or reject the request.

In some embodiments, the fifth frame is a management frame.

In some embodiments, the method 1000 further includes:
receiving, by the access point device, a sixth frame transmitted by the station device, where the sixth frame is used to notify status information of the low-latency priority mode on the station device, for example, whether the low-latency priority mode is enabled (in other words, whether the low-latency priority mode is in an enabled state or a disabled state), duration for which the low-latency priority mode is enabled, and the like.

In some embodiments, the sixth frame is a management frame.

In conclusion, in embodiments of this application, in a transmission opportunity hold by the access point device for transmitting non-latency-sensitive data, if the access point device has latency-sensitive data to be transmitted to at least one station device, the access point device may transmit the latency-sensitive data to the at least one station device in the transmission opportunity for transmitting the non-latency-sensitive data, thereby ensuring timely transmission of latency-sensitive data. For example, before transmitting latency-sensitive data, the access point device may determine, based on a mode or a state of the at least one station device, whether to transmit an RTS frame and/or an MU-RTS trigger frame to the at least one station device. For example, when the at least one station device is in the active mode, latency-sensitive data may be directly transmitted to the at least one station device; or when the at least one station device is in the power save mode, an RTS frame and/or an MU-RTS trigger frame may be first transmitted to the at least one station device, and then latency-sensitive data is transmitted to a station device that responds to the CTS frame.

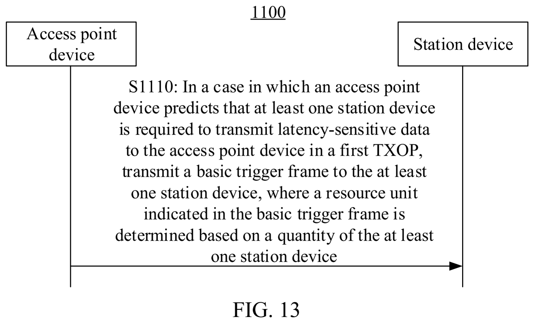

FIG. 13 is a schematic interaction diagram of a wireless communication method 1100 according to another embodiment of this application. As shown in FIG. 13, the method 1100 includes the following content.

In S1110, in a case in which the access point device predicts that at least one station device is required to transmit latency-sensitive data to the access point device in a first transmission opportunity TXOP, the access point device transmits a basic trigger frame (Basic Trigger frame) to the at least one station device, where a resource unit indicated in the basic trigger frame is determined based on a quantity of the at least one station device.

In some embodiments, the access point device is a holder (holder) of the first TXOP, and the first TXOP is acquired by the access point device for transmitting non-latency-sensitive data to a first station device.

It should be understood that, in the method 1100, for specific descriptions of latency-sensitive data and non-latency-sensitive data, reference is made to related descriptions in the method 200. For brevity, details are not described herein again.

In some embodiments, when a time length of the first TXOP is greater than a first threshold (for example, greater than 500 microseconds), the access point device allows the at least one station device to preempt a TXOP used for transmitting non-latency-sensitive data between the access point device and the first station device, to transmit the latency-sensitive data to the access point device in the TXOP. That is, in a case in which duration of the first TXOP is greater than the first threshold, S1110 is performed.

In some embodiments, for specific implementation of the access point device predicting that at least one station device is required to transmit latency-sensitive data to the access point device in a first transmission opportunity TXOP, reference is made to related description in the method 200. For brevity, details are not described herein again.

For example, the at least one station device may be a station device that may have latency-sensitive data in a BSS.

In some embodiments, a type of an RA-RU and a quantity of RA-RUs in the basic trigger frame transmitted by the AP may be determined based on a quantity of station devices that may have latency-sensitive data in the BSS. For example, in a UORA scenario, available RU types for each station device under each bandwidth and a maximum quantity of available RUs per RU type may be as shown in Table 1 and Table 2. For example, if a maximum quantity of available 26-tone RUs under a current operating bandwidth is 9, and there are five station devices that may have latency-sensitive data in the BSS, then three 52-tone RA-RUs and two 26-tone RA-RUs may be allocated.

In some embodiments, if another station device other than the first station device in the BSS is required to transmit latency-sensitive data to the access point device, the another station device may contend for an RA-RU by using the UORA method to transmit latency-sensitive data to the access point device.

In some embodiments, for specific implementation of the at least one station device, reference is made to related description in the method 200. For brevity, details are not described herein again.

In some embodiments, the at least one station device may include at least one of the following:
a station device that has historically transmitted latency-sensitive data;
a station device that has historically established a latency-sensitive data flow by using a stream classification service; or
a station device on which a low-latency priority mode (or referred to as a latency-sensitive priority mode) is enabled, where when the station device is in the low-latency priority mode, latency-sensitive data is transmitted with priority.

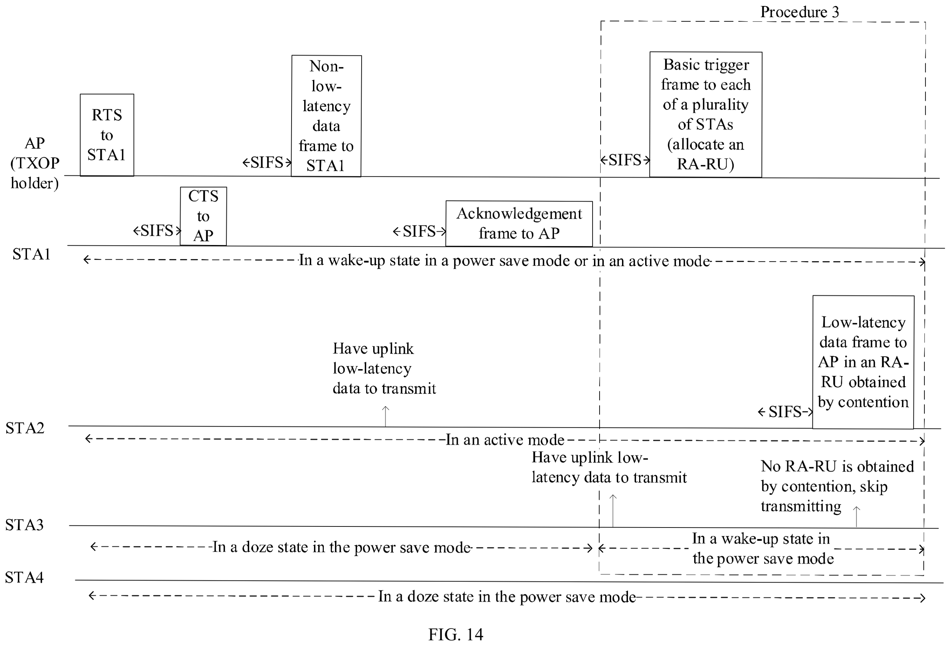

With reference to a specific example shown in FIG. 14, the following describes a TXOP preemption method according to an embodiment of this application.

In the example shown in FIG. 14, an AP is a holder of a TXOP, and in the TXOP, the AP may use an RTS/CTS frame exchange as an initial frame exchange, or may use an MU-RTS Trigger/ CTS frame exchange as an initial frame exchange. Therefore, a station device that is not a target station of the RTS or MU-RTS Trigger may fail to receive a frame from the AP due to that the station device is in the power save mode and in the doze state.

In the example shown in FIG. 14, data transmitted by the AP to a STA 1 in the TXOP is non-latency-sensitive data. When the AP predicts that a STA 2, a STA 3, and a STA 4 has latency-sensitive data to be transmitted to the AP (for a specific prediction method, reference is made to related descriptions in the foregoing embodiment), the following procedure 4 may be performed.

The AP transmits a basic trigger frame to each of the STA 2, the STA 3, and the STA 4, where the basic trigger frame indicates an RA-RU allocated to the STA 2, the STA 3, and the STA 4.

The STA 2 is in the active mode, the STA 3 is in the power save mode and in the awake state, and the STA 4 is in the power save mode and in the doze state. If the STA 2 obtains the RA-RU by contention, the STA 2 may transmit, to the AP, a data frame that carries latency-sensitive data in the obtained RA-RU.

In some embodiments, a low-latency priority mode, also referred to as a BSS low-latency priority mode, is enabled on the access point device, and in a case in which the low-latency priority mode is enabled, the access point device prioritizes transmission of latency-sensitive data, for example, transmits latency-sensitive data by performing the foregoing procedure.

In some embodiments, whether to enable the low-latency priority mode on the access point device is independently determined by the access point device, for example, based on a transmission status of latency-sensitive data within a BSS, or is set by a user.

In some embodiments of this application, the access point device may notify a station device within the BSS of status information of the low-latency priority mode on the access point device, such as whether the low-latency priority mode is enabled (in other words, whether the low-latency priority mode is in an enabled state or a disabled state), duration for which the low-latency priority mode is enabled, and the like. For example, the access point device transmits a fourth frame, where the fourth frame is used to notify status information of the low-latency priority mode on the access point device.

In some embodiments, the fourth frame includes at least one of the following:
a management frame (for example, Beacon), a probe response (Probe Response) frame, an association response (Association Response) frame, a reassociation response (Reassociation Response) frame, or an operation mode notification (Operation Mode Notification) frame.

In some embodiments, the low-latency priority mode is enabled on the at least one station device, and in a case in which the low-latency priority mode is enabled, the at least one station device prioritizes transmission of latency-sensitive data.

In some embodiments, in a case in which the low-latency priority mode is enabled on a station device, the station device is always in the active mode, or is always in the awake state in the power save mode.

In some embodiments, whether to enable the low-latency priority mode on the station device is determined by the station device based on, for example, a transmission status of latency-sensitive data of the station device, or is set by a user, or is determined based on a request from the access point device.

For example, the access point device transmits a fifth frame to the station device, where the fifth frame is used to request the station device to enable or disable the low-latency priority mode. The station device may accept or reject the request.

In some embodiments, the fifth frame is a management frame.

In some embodiments, the method 1100 further includes:
receiving, by the access point device, a sixth frame transmitted by the station device, where the sixth frame is used to notify status information of the low-latency priority mode on the station device, for example, whether the low-latency priority mode is enabled (in other words, whether the low-latency priority mode is in an enabled state or a disabled state), duration for which the low-latency priority mode is enabled, and the like.

In some embodiments, the sixth frame is a management frame.

In conclusion, in embodiments of this application, in a transmission opportunity hold by an access point device for transmitting non-latency-sensitive data, if the access point device predicts that at least one station device is required to transmit latency-sensitive data to the access point device, the access point device may allocate a resource unit to the at least one station device based on a quantity of the at least one station device. Further, the at least one station device may contend for access to the resource unit using the UORA method. A station device that gains access to the resource unit may transmit latency-sensitive data by using the resource unit, thereby ensuring timely transmission of latency-sensitive data.

It should be understood that, in embodiments of this application, the method 200, the method 1000, and the method 1100 may be implemented separately, or in combination with each other, which is not limited in this application.

For example, the procedure 1, the procedure 2, the procedure 3, and the procedure 4 may be used separately, or may be used in combination with each other. For example, the procedure 2 and/or the procedure 3 may be performed first, and then the procedure 4 and/or the procedure 1 may be performed. That is, downlink latency-sensitive data may be transmitted first, and then uplink latency-sensitive data may be transmitted. Since the procedure 2 or the procedure 3 is performed when the access point device determines that the access point device has downlink latency-sensitive data, an execution result of the procedure 2 or the procedure 3 can surely reduce a transmission latency of the latency-sensitive data. In contrast, the procedure 4 or the procedure 1 is executed by the access point device based on prediction, and there may be actually no downlink latency-sensitive data to be transmitted.

In some embodiments, execution timing and/or execution frequency of the method 200, the method 1000, and the method 1100 may be predefined, determined by the access point device, or set by a user, for example, may be determined based on a transmission status of latency-sensitive data within the BSS. For example, the access point device may execute the procedure 1, the procedure 2, the procedure 3, or the procedure 4 in a second half of a transmission opportunity hold by the access point device. In another example, the access point device may execute the procedure 1, the procedure 2, the procedure 3, or the procedure 4 staring from an instant at a 1/4 position of a transmission opportunity hold by the access point device. After completing the above process, the access point device may resume transmission of non-latency-sensitive data with the first station device, and then execute the above process again starting from an instant at a 3/4 position of the transmission opportunity. For another example, the access point may perform the procedure 1, the procedure 2, the procedure 3, or the procedure 4 once each time when one transmission of non-latency-sensitive data with the first station device is finished.

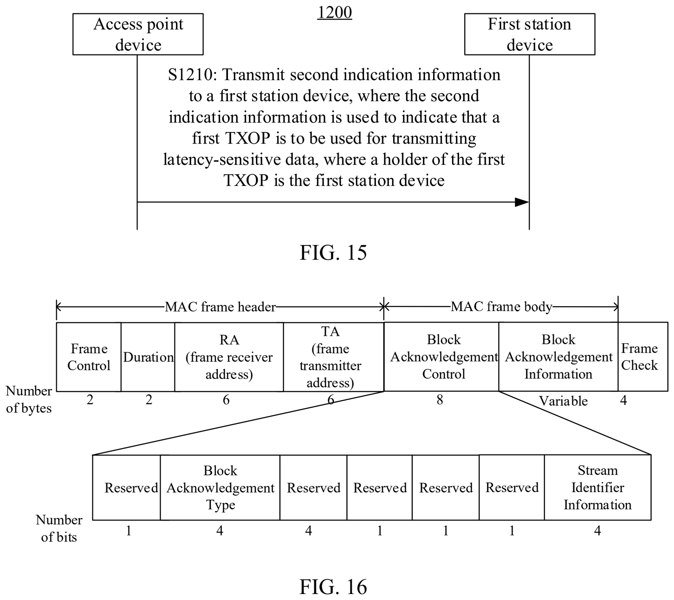

FIG. 15 is a schematic interaction diagram of a wireless communication method 1200 according to still another embodiment of this application. As shown in FIG. 15, the method 1200 includes the following content.

In S1210, in a case in which an access point device is required to transmit latency-sensitive data to at least one station device in a first transmission opportunity TXOP or predicts that at least one station device is required to transmit latency-sensitive data to the access point device in a first TXOP, the access point device transmits second indication information to a first station device, where the second indication information is used to indicate that the first TXOP is to be used for transmitting latency-sensitive data or used to request to transmit latency-sensitive data in the first TXOP, where a holder of the first TXOP is the first station device.

That is, the access point device may preempt the TXOP used for transmitting the non-latency-sensitive data to transmit downlink latency-sensitive data in the TXOP, or the access point device may preempt the TXOP used for transmitting the non-latency-sensitive data to acquire uplink latency-sensitive data in the TXOP.

In some embodiments, the TXOP preemption scenario in the method 1200 may be the TXOP preemption scenario in the method 200, the method 1000, or the method 1100. Therefore, in the method 1200, before TXOP preemption is performed, the access point device may transmit second indication information to a holder of the TXOP, so as to notify the holder of the TXOP that the TXOP hold by holder is to be used for transmitting latency-sensitive data.

In some embodiments, when a time length of the first TXOP is greater than a first threshold (for example, greater than 500 microseconds), the first TXOP is to be used for transmitting latency-sensitive data. That is, in a case in which duration of the first TXOP is greater than the first threshold, S1210 is performed.

In some embodiments, the first station device is a holder (holder) of the first TXOP, and the first station device acquires the first TXOP for transmitting non-latency-sensitive data to the access point device.

It should be understood that, in the method 1200, for specific descriptions of latency-sensitive data and non-latency-sensitive data, reference is made to related descriptions in the method 200. For brevity, details are not described herein again.

In some embodiments, the second indication information is carried in a seventh frame transmitted by the access point device to the first station device in the first TXOP. Optionally, the seventh frame may be a response frame or an acknowledgment frame transmitted by the access point device to the first station device for the non-latency-sensitive data, for example, a block acknowledgment (Block Ack, BA) frame, or may be a data frame transmitted by the access point device to the first station device for the non-latency-sensitive data.

In some embodiments, the second indication information is carried in a reserved bit in the seventh frame. For example, as shown in FIG. 16, the second indication information is carried in a reserved bit in a block acknowledgment control (BA Control) field in a BA frame.

In some embodiments, the access point device supports a TXOP preemption function, or a TXOP preemption mode is enabled on the access point device.

In some embodiments, the first station device supports a TXOP preemption function, or a TXOP preemption mode is enabled on the first station device.

For example, when a user requires to better ensure transmission of latency-sensitive data, for example, when the user is not at home, the user requires to report latency-sensitive data such as gas leakage sensor data and/or water leakage sensor data in a timely manner, the user may enable the TXOP preemption function on a station device in a network before leaving home.

In some embodiments, the access point device that supports transmission opportunity preemption may transmit a management frame to at least one station device, so as to request the at least one station device to enable the TXOP preemption mode. For example, the management frame may further indicate duration for which the TXOP preemption mode is enabled.

In some embodiments, the at least one station device may accept or reject the request from the access point device.

In some embodiments, the access point device that supports transmission opportunity preemption may also transmit a management frame to the at least one station device, so as to request the at least one station device to disable the TXOP preemption mode. For example, the management frame may further indicate duration for which the TXOP preemption mode is disabled.

In some embodiments, a station device that supports transmission opportunity preemption may transmit a management frame to the access point device to request to participate in transmission of uplink and/or downlink latency-sensitive data in the preempted TXOP. For example, the management frame may further indicate duration for the participation. Further, the access point device may accept or reject a request from the station device.

Optionally, in a case in which the TXOP mode is enabled on the first station device, the access point device may preempt a transmission time in the first TXOP of the first station device for transmitting uplink and/or downlink latency-sensitive data between the access point device and another station device.

In some embodiments, the access point device may also transmit a management frame to the at least one station device, so as to request the at least one station device to disable the TXOP preemption mode. For example, the management frame may further indicate duration for which the TXOP preemption mode is disabled.

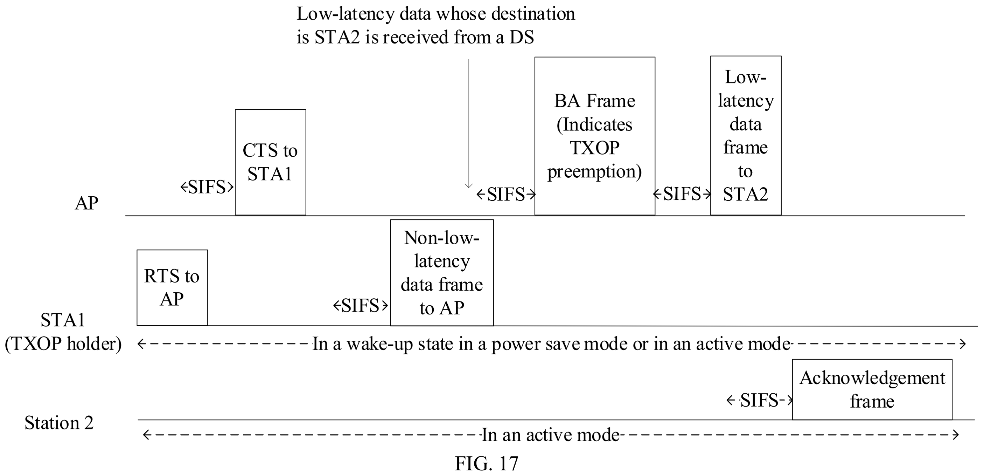

With reference to specific examples shown in FIG. 17 to FIG. 21, the following describes a TXOP preemption method according to an embodiment of this application.

In the examples shown in FIG. 17 to FIG. 21, a STA 1 is a holder of a TXOP, and in the TXOP, the STA 1 uses an RTS/CTS frame exchange as an initial frame exchange, or uses an MU-RTS Trigger/CTS frame exchange as an initial frame exchange. Further, the STA 1 may transmit, to the AP, a data frame that carries non-latency-sensitive data. Further, a procedure 5 may be performed: The AP replies to the STA 1 with a BA frame, where the BA frame indicates that the TXOP is to be preempted for transmitting latency-sensitive data, or the AP may transmit a data frame to the STA 1, where the data frame indicates that the TXOP is to be preempted for transmitting latency-sensitive data.

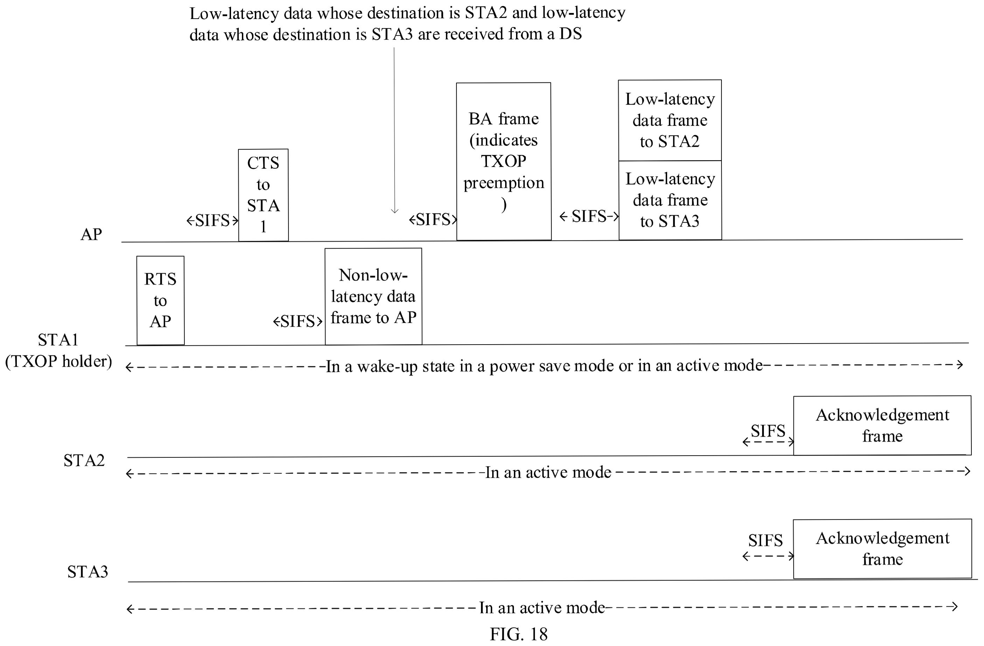

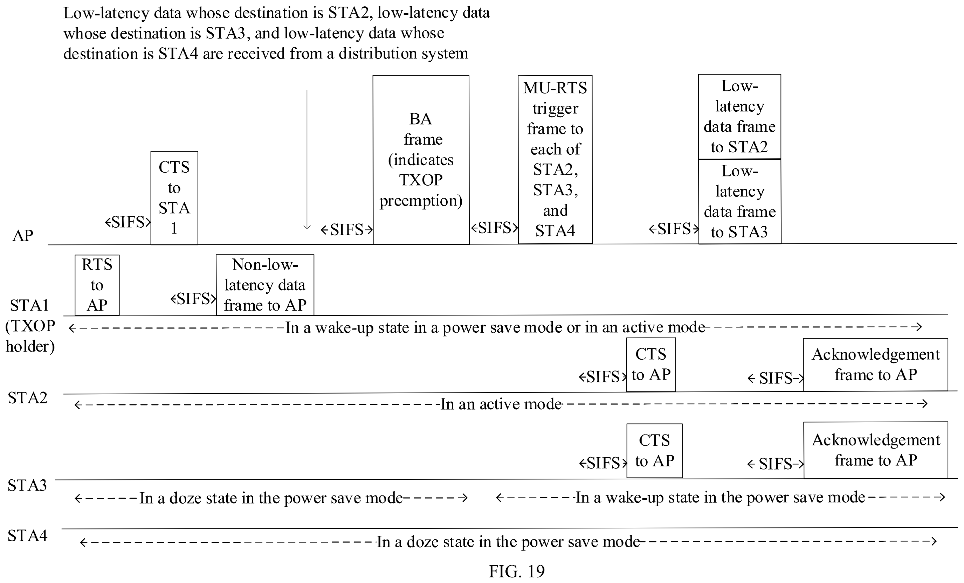

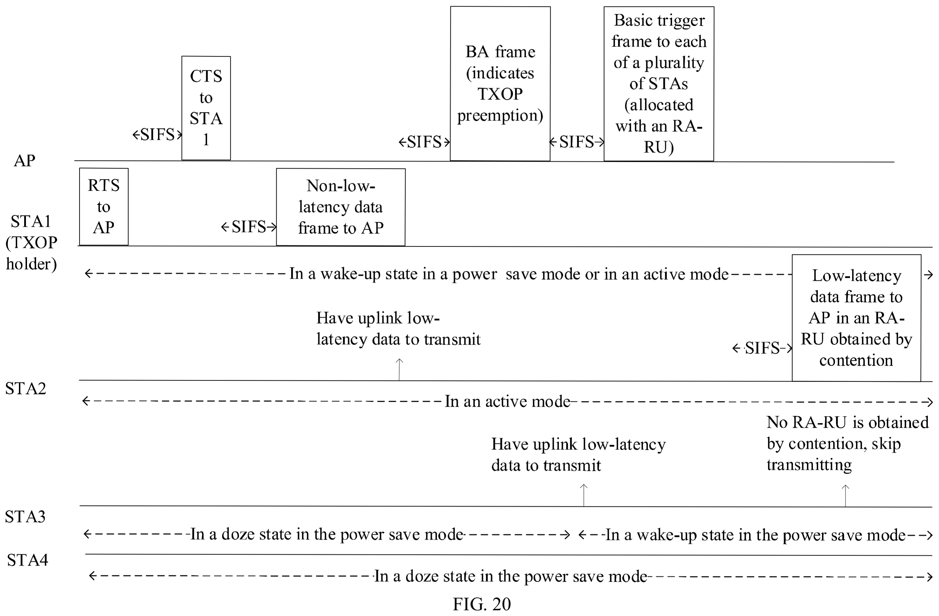

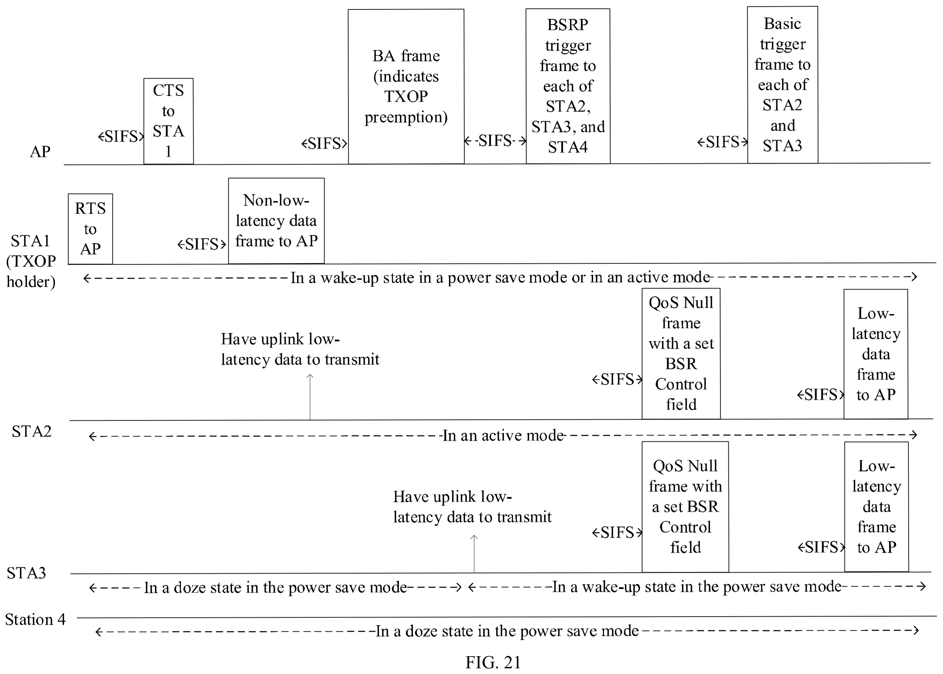

It should be understood that a subsequent interaction procedure shown in FIG. 17 may correspond to the procedure 2 as illustrated in FIG. 10 in the method 1000; a subsequent procedure in FIG. 18 may correspond to the procedure 2 as illustrated in FIG. 11; a subsequent procedure in FIG. 19 may correspond to the procedure 3 as illustrated in FIG. 12; a subsequent procedure in FIG. 20 may correspond to the procedure 3 as illustrated in FIG. 14; and a subsequent procedure in FIG. 21 may correspond to the procedure 1 as illustrated in FIG. 7. For a specific execution process, reference is made to related descriptions in the foregoing embodiments. For brevity, details are not described herein again.

In conclusion, in embodiments of this application, when a transmission opportunity that is used for transmitting non-latency-sensitive data and that is owned by a first station device is to be used for transmitting latency-sensitive data, an access point device may transmit second indication information to the first station device, so that a purpose of the transmission opportunity is changed, that is, the transmission opportunity is to be used for transmitting latency-sensitive data. Further, the access point device or another station device may transmit latency-sensitive data in the TXOP, so as to ensure timely transmission of the latency-sensitive data.

It should be understood that, in embodiments of this application, the method 200, the method 1000, the method 1100, and the method 1200 may be implemented separately, or in combination with each other, which is not limited in this application.

For example, the procedure 1, the procedure 2, the procedure 3, and the procedure 4 may be used separately, or may be used in combination with each other. For example, the procedure 2 and/or the procedure 3 may be performed first, and then the procedure 4 and/or the procedure 1 may be performed. That is, downlink latency-sensitive data may be transmitted first, and then uplink latency-sensitive data may be transmitted. Since the procedure 2 or the procedure 3 is performed when the access point device determines that the access point device has downlink latency-sensitive data, an execution result of the procedure 2 or the procedure 3 can surely reduce a transmission latency of the latency-sensitive data. In contrast, the procedure 4 or the procedure 1 is executed by the access point device based on prediction, and there may be actually no downlink latency-sensitive data to be transmitted. The procedure 5 is executed before the procedure 1, the procedure 2, the procedure 3, and the procedure 4.

In some embodiments, execution timing and/or execution frequency of the method 200, the method 1000, the method 1100, and the method 1200 may be predefined, determined by the access point device, or set by a user, for example, may be determined based on a transmission status of latency-sensitive data within the BSS. For example, the access point device may execute the procedure in a second half of a transmission opportunity hold by the first station device. In another example, the access point device may execute the above procedure staring from an instant at a 1/4 position of a transmission opportunity hold by the first station device. After completing the above procedure, the access point device may resume transmission of non-latency-sensitive data with the first station device, and then execute the above procedure again starting from an instant at a 3/4 position of the transmission opportunity. For another example, the access point may perform the above procedure once each time when one transmission of non-latency-sensitive data with the first station device is finished.

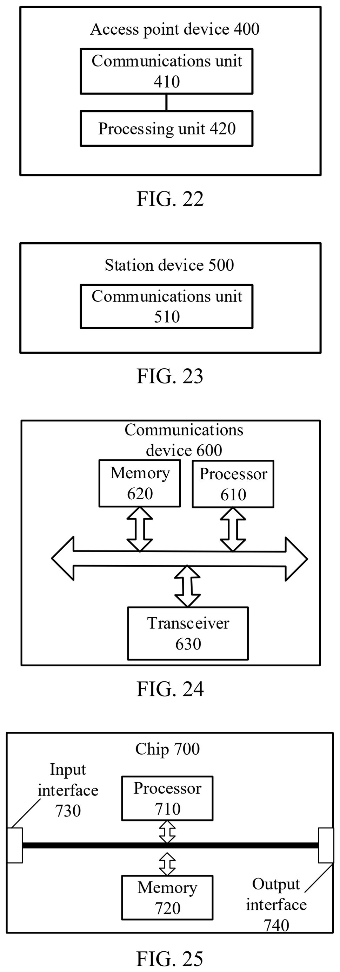

The foregoing describes method embodiments of this application in detail with reference to FIG. 6 to FIG. 21. The following describes apparatus embodiments of this application in detail with reference to FIG. 22 to FIG. 26. It should be understood that the apparatus embodiments correspond to the method embodiments. For similar descriptions, refer to the method embodiments.

FIG. 22 is a schematic block diagram of an access point device 400 according to an embodiment of this application. As shown in FIG. 22, the access point device 400 includes:
a communications unit 410, configured to: in a case in which an access point device predicts that at least one station device is required to transmit latency-sensitive data to the access point device in a first transmission opportunity TXOP, transmit, by the access point device, a first frame to the at least one station device, where the first frame is used to request to acquire buffer status information of latency-sensitive data to be transmitted by the at least one station device, and the first TXOP is acquired by the access point device for transmitting non-latency-sensitive data to a first station device; and
a processing unit 420, configured to determine, based on a response status of the at least one station device to the first frame and/or content of the buffer status information, a target station device in the at least one station device and/or a resource unit allocated to the target station device, where the target station device is a station device that is in the at least one station device and that is able to transmit latency-sensitive data to the access point device in the first TXOP.

In some embodiments, the first frame includes first indication information, and the first indication information is used to indicate a data type corresponding to the buffer status information requested to be acquired, or is used to indicate requesting to acquire the buffer status information of the latency-sensitive data.

In some embodiments, the first indication information is carried in a common information field in the first frame.

In some embodiments, the first frame is a trigger frame.

In some embodiments, the first frame includes at least one of the following frames:
a buffer status report poll BSRP trigger frame, or a null data physical layer protocol data unit feedback report poll NFRP trigger frame.

In some embodiments, the target station device is a station device that is in the at least one station device and that feeds back the buffer status information to the access point device.

In some embodiments, the target station device is a station device in an active mode, or a station device in a power save mode and in an awake state.

In some embodiments, the communications unit 410 is further configured to receive a second frame transmitted by at least one station device, where the second frame includes the buffer status information corresponding to the latency-sensitive data to be transmitted by the station device.

In some embodiments, the second frame is a quality of service null QoS Null frame, and a QoS control field in the QoS Null frame is used to indicate an amount of data in a target buffer queue of the station device, and the target buffer queue is used to buffer latency-sensitive data.

Alternatively, the second frame is a null data physical layer protocol data unit NDP frame, and a transmission parameter of the NDP frame is used to determine whether a data amount of the latency-sensitive data to be transmitted is greater than a buffer threshold.

In some embodiments, the communications unit 410 is further configured to transmit a third frame to the target station device, where the third frame is used to indicate a resource unit allocated by the access point device to the target station device.

In some embodiments, the third frame includes a basic trigger frame.

In some embodiments, the communications unit 410 is further configured to receive the latency-sensitive data transmitted by the target station device by using the resource unit allocated by the access point device to the target station device.

In some embodiments, a low-latency priority mode is enabled on the access point device, and in a case in which the low-latency priority mode is enabled, the access point device prioritizes transmission of the latency-sensitive data.

In some embodiments, whether to enable the low-latency priority mode on the access point device is determined based on a transmission status of the latency-sensitive data in a basic service set BSS, or is set by a user.

In some embodiments, the communications unit 410 is further configured to transmit a fourth frame, where the fourth frame is used to notify status information of the low-latency priority mode on the access point device.

In some embodiments, the fourth frame includes at least one of the following:
a management frame, a probe response frame, an association response frame, a reassociation response frame, or an operation mode notification frame.

In some embodiments, the status information of the low-latency priority mode on the access point device includes whether the low-latency priority mode is enabled on the access point device and/or duration for which the low-latency priority mode is enabled.

In some embodiments, a low-latency priority mode is enabled on the at least one station device, and in a case in which the low-latency priority mode is enabled, the station device prioritizes transmission of latency-sensitive data.

In some embodiments, in a case in which the low-latency priority mode is enabled on a station device, the station device is always in the active mode, or is always in the awake state in the power save mode.

In some embodiments, whether to enable the low-latency priority mode on the station device is determined based on a transmission status of the latency-sensitive data of the station device, or is set by a user, or is determined based on a request from the access point device.

In some embodiments, the communications unit 410 is further configured to transmit a fifth frame to the station device, where the fifth frame is used to request the station device to enable or disable the low-latency priority mode.

In some embodiments, the fifth frame is a management frame.

In some embodiments, the communications unit 410 is further configured to receive a sixth frame transmitted by the station device, where the sixth frame is used to notify status information of the low-latency priority mode on the station device.

In some embodiments, the sixth frame is a management frame.

In some embodiments, the status information of the low-latency priority mode on the station device includes whether the low-latency priority mode is enabled on the station device and/or duration for which the low-latency priority mode is enabled.

In some embodiments, the at least one station device may include at least one of the following:
a station device that has historically transmitted latency-sensitive data;
a station device that has historically established a latency-sensitive data flow by using a stream classification service; or
a station device on which a low-latency priority mode is enabled.

Optionally, in some embodiments, the communications unit may be a communications interface or a transceiver, or an input/output interface of a communications chip or a system-on-chip. The processing unit may be one or more processors.

It should be understood that the access point device 400 in embodiments of this application may correspond to the access point device in the method embodiments of this application, and the foregoing and other operations and/or functions of the units in the access point device 400 are used to implement corresponding procedures of the access point device in the method 200 shown in FIG. 6 to FIG. 8. For brevity, details are not described herein again.

FIG. 23 is a schematic block diagram of a station device according to an embodiment of this application. The station device 500 in FIG. 23 includes:
a communications unit 510, configured to: receive a first frame transmitted by an access point device, where the first frame is used to request to acquire buffer status information of latency-sensitive data to be transmitted by the station device; and
transmit, to the access point device, the buffer status information of latency-sensitive data to be transmitted by the station device.

In some embodiments, the first frame includes first indication information, and the first indication information is used to indicate a data type corresponding to the buffer status information requested to be acquired, or is used to indicate requesting to acquire the buffer status information of the latency-sensitive data.

In some embodiments, the first indication information is carried in a common information field in the first frame.

In some embodiments, the first frame is a trigger frame.

In some embodiments, the first frame includes at least one of the following frames:
a buffer status report poll BSRP trigger frame, or a null data physical layer protocol data unit feedback report poll NFRP trigger frame.

In some embodiments, the station device is in an active mode, or in a power save mode and in an awake state.

In some embodiments, the communications unit 510 is further configured to transmit a second frame to the access point device, where the second frame includes the buffer status information corresponding to the latency-sensitive data to be transmitted by the station device.

In some embodiments, the second frame is a quality of service null QoS Null frame, and a QoS control field in the QoS Null frame is used to indicate an amount of data in a target buffer queue of the station device, and the target buffer queue is used to buffer the latency-sensitive data.

In some embodiments, the second frame is a null data physical layer protocol data unit NDP frame, and a transmission parameter of the NDP frame is used to determine whether a data amount of the latency-sensitive data to be transmitted is greater than a buffer threshold.

In some embodiments, the communications unit 510 is further configured to receive a third frame transmitted by the access point device, where the third frame is used to indicate a resource unit allocated by the access point device to the station device.

In some embodiments, the third frame includes a basic trigger frame.

In some embodiments, the communications unit 510 is further configured to transmit the latency-sensitive data to the access point device by using the resource unit allocated by the access point device to the station device.

In some embodiments, a low-latency priority mode is enabled on the access point device, and in a case in which the low-latency priority mode is enabled, the access point device prioritizes transmission of the latency-sensitive data.

In some embodiments, whether to enable the low-latency priority mode on the access point device is determined based on a transmission status of the latency-sensitive data in a basic service set BSS, or is set by a user.

In some embodiments, the communications unit 510 is further configured to receive a fourth frame transmitted by the access point device, where the fourth frame is used to notify status information of the low-latency priority mode on the access point device.

In some embodiments, the fourth frame includes at least one of the following:
a management frame, a probe response frame, an association response frame, a reassociation response frame, or an operation mode notification frame.

In some embodiments, the status information of the low-latency priority mode on the access point device includes whether the low-latency priority mode is enabled on the access point device and/or duration for which the low-latency priority mode is enabled.

In some embodiments, a low-latency priority mode is enabled on the station device, and in a case in which the low-latency priority mode is enabled, the station device prioritizes transmission of the latency-sensitive data.

In some embodiments, in a case in which the low-latency priority mode is enabled on a station device, the station device is always in the active mode, or is always in the awake state in the power save mode.

In some embodiments, whether to enable the low-latency priority mode on the station device is determined based on a transmission status of latency-sensitive data of the station device, or is set by a user, or is determined based on a request from the access point device.

In some embodiments, the communications unit 510 is further configured to receive a fifth frame transmitted by the access point device, where the fifth frame is used to request the station device to enable or disable the low-latency priority mode.

In some embodiments, the fifth frame is a management frame.

In some embodiments, the communications unit 510 is further configured to transmit a sixth frame to the access point device, where the sixth frame is used to notify status information of the low-latency priority mode on the station device.

In some embodiments, the sixth frame is a management frame.

In some embodiments, the status information of the low-latency priority mode on the station device includes whether the low-latency priority mode is enabled on the station device and/or duration for which the low-latency priority mode is enabled.

In some embodiments, the station device satisfies at least one of the following conditions:
the station device has historically transmitted latency-sensitive data;
the station device has historically established a latency-sensitive data flow by using a stream classification service; or
a low-latency priority mode is enabled on the station device.

Optionally, in some embodiments, the communications unit may be a communications interface or a transceiver, or an input/output interface of a communications chip or a system-on-chip. The processing unit may be one or more processors.

It should be understood that the station device 500 in embodiments of this application may correspond to the first station device in the method embodiments of this application, and the foregoing and other operations and/or functions of units in the station device 500 are used to implement corresponding processes of the first station device in the method 200 shown in FIG. 6 to FIG. 8. For brevity, details are not described herein again.

FIG. 24 is a schematic structural diagram of a communications device 600 according to an embodiment of this application. The communications device 600 shown in FIG. 23 includes a processor 610, and the processor 610 may invoke a computer program from a memory and run the computer program to implement a method in embodiments of this application.

Optionally, as shown in FIG. 24, the communications device 600 may further include a memory 620. The processor 610 may invoke a computer program from the memory 620 and run the computer program to implement a method in embodiments of this application.

The memory 620 may be a separate component independent of the processor 610, or may be integrated into the processor 610.

Optionally, as shown in FIG. 24, the communications device 600 may further include a transceiver 630. The processor 610 may control the transceiver 630 to communicate with another device, and specifically, may transmit information or data to the another device, or receive information or data transmitted by the another device.

The transceiver 630 may include a transmitter and a receiver. The transceiver 630 may further include an antenna, and there may be one or more antennas.

Optionally, the communications device 600 may be specifically the access point device in embodiments of this application, and the communications device 600 may implement a corresponding procedure implemented by the access point device in the methods in embodiments of this application. For brevity, details are not described herein again.

Optionally, the communications device 600 may be specifically the first station device in embodiments of this application, and the communications device 600 may implement corresponding processes implemented by the first station device in methods in embodiments of this application. For brevity, details are not described herein again.

FIG. 25 is a schematic structural diagram of a chip according to an embodiment of this application. A chip 700 shown in FIG. 25 includes a processor 710, and the processor 710 may invoke a computer program from a memory and run the computer program to implement a method in embodiments of this application.

Optionally, as shown in FIG. 25, the chip 700 may further include a memory 720. The processor 710 may invoke a computer program from the memory 720 and run the computer program to implement a method in embodiments of this application.

The memory 720 may be a separate component independent of the processor 710, or may be integrated into the processor 710.

Optionally, the chip 700 may further include an input interface 730. The processor 710 may control the input interface 730 to communicate with another device or chip, and specifically, may obtain information or data transmitted by the another device or chip.

Optionally, the chip 700 may further include an output interface 740. The processor 710 may control the output interface 740 to communicate with another device or chip, and specifically, may output information or data to the another device or chip.

Optionally, the chip may be applied to the access point device in embodiments of this application, and the chip may implement corresponding processes implemented by the access point device in methods in embodiments of this application. For brevity, details are not described herein again.

Optionally, the chip may be applied to the first station device in embodiments of this application, and the chip may implement corresponding processes implemented by the first station device in methods in embodiments of this application. For brevity, details are not described herein again.

It should be understood that the chip mentioned in this embodiment of this application may alternatively be referred to as a system-level chip, a system chip, a chip system, a system-on-chip, or the like.

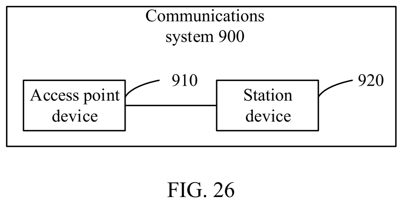

FIG. 26 is a schematic block diagram of a communications system 900 according to an embodiment of this application. As shown in FIG. 26, the communications system 900 includes an access point device 910 and a station device 920.

The access point device 910 may be used to implement the corresponding functions implemented by the access point device in the foregoing methods, and the station device 920 may be used to implement the corresponding functions implemented by the station device in the foregoing methods. For brevity, details are not described herein again.

It should be understood that, a processor in the embodiment of this application may be an integrated circuit chip having a signal processing capability. In an implementation process, the steps in the foregoing method embodiments may be performed by using an integrated logic circuit of hardware of the processor or instructions in a software form. The processor may be a general-purpose processor, a digital signal processor (Digital Signal Processor, DSP), an application-specific integrated circuit (Application Specific Integrated Circuit, ASIC), a field-programmable gate array (Field Programmable Gate Array, FPGA) or another programmable logic device, a discrete gate or a transistor logic device, or a discrete hardware component. The methods, the steps, and logical block diagrams that are disclosed in embodiments of this application may be implemented or performed. The general-purpose processor may be a microprocessor, or the processor may be any conventional processor or the like. The steps of the methods disclosed with reference to embodiments of this application may be directly implemented by a hardware decoding processor, or may be implemented by a combination of hardware and software modules in a decoding processor. The software module may be located in a mature storage medium in the art, such as a random access memory, a flash memory, a read-only memory, a programmable read-only memory, an electrically erasable programmable memory, or a register. The storage medium is located in a memory, and the processor reads information in the memory and completes the steps of the foregoing methods in combination with hardware of the processor.

It may be understood that the memory in embodiments of this application may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. By way of example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct Rambus random access memory (Direct Rambus RAM, DR RAM). It should be noted that, the memory in the systems and methods described in this specification includes but is not limited to these memories and any memory of another proper type.

It should be understood that, by way of example but not limitative description, for example, the memory in this embodiment of the this application may alternatively be a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synch link DRAM, SLDRAM), a direct Rambus random access memory (Direct Rambus RAM, DR RAM), or the like. In other words, the memory in embodiments of this application includes but is not limited to these memories and any memory of another proper type.

An embodiment of this application further provides a computer readable storage medium, configured to store a computer program.

Optionally, the computer-readable storage medium may be applied to an access point device in embodiments of this application, and the computer program causes a computer to execute corresponding processes implemented by the access point device in the methods in embodiments of this application. For brevity, details are not described herein again.

Optionally, the computer-readable storage medium may be applied to the first station device in embodiments of this application, and the computer program causes a computer to execute corresponding processes implemented by the first station device in methods in embodiments of this application. For brevity, details are not described herein again.

An embodiment of this application further provides a computer program product, including computer program instructions.

Optionally, the computer program product may be applied to an access point device in embodiments of this application, and the computer program instructions cause a computer to execute corresponding processes implemented by the access point device in the methods in embodiments of this application. For brevity, details are not described herein again.

Optionally, the computer program product may be applied to the first station device in embodiments of this application, and the computer program instructions cause a computer to execute corresponding processes implemented by the first station device in methods in embodiments of this application. For brevity, details are not described herein again.

An embodiment of this application further provides a computer program.

Optionally, the computer program may be applied to an access point device in embodiments of this application. When the computer program runs on a computer, the computer executes corresponding processes implemented by the access point device in the methods in embodiments of this application. For brevity, details are not described herein again.

Optionally, the computer program may be applied to the first station device in embodiments of this application, and the computer program, when run by a computer, causes the computer to execute corresponding processes implemented by the first station device in methods in embodiments of this application. For brevity, details are not described herein again.

A person of ordinary skill in the art may be aware that, units and algorithm steps in examples described in combination with embodiments disclosed in this specification can be implemented by electronic hardware or a combination of computer software and electronic hardware. Whether the functions are executed by hardware or software depends on particular applications and design constraints of the technical solutions. A person skilled in the art may use different methods to implement the described functions for each specific application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to corresponding processes in the foregoing method embodiments, and details are not described herein again.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may be or may not be physically separate, and parts displayed as units may be or may not be physical units, and may be at one location, or may be distributed on a plurality of network elements. Some or all of the units may be selected according to actual requirements to achieve the objective of the solutions of embodiments.

In addition, function units in embodiments of this application may be integrated into one processing unit, or each of the units may exist alone physically, or two or more units may be integrated into one unit.

When the functions are implemented in a form of a software function unit and sold or used as an independent product, the functions may be stored in a computer-readable storage medium. Based on such an understanding, the technical solutions of embodiments of this application essentially, or the part contributing to the conventional technology, or some of the technical solutions may be implemented in the form of a software product. The computer software product is stored in a storage medium and includes several instructions for instructing a computer device (which may be a personal computer, a server, a network device, or the like) to execute all or some of the steps of the methods described in embodiments of this application. The foregoing storage medium includes various media that may store a program code, such as a USB flash drive, a removable hard disk, a read-only memory (Read-only Memory, ROM), a random access memory (Random Access Memory, RAM), a magnetic disk, or an optical disk.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application should be subject to the protection scope of the claims.

## Claims

1. A wireless communication method, comprising:
in a case in which an access point device predicts that at least one station device is required to transmit latency-sensitive data to the access point device in a first transmission opportunity TXOP, transmitting, by the access point device, a first frame to the at least one station device, wherein the first frame is used to request to acquire buffer status information of the latency-sensitive data to be transmitted by the at least one station device, and the first TXOP is acquired by the access point device for transmitting non-latency-sensitive data to a first station device; and
determining, based on a response status of the at least one station device to the first frame and/or content of the buffer status information, a target station device in the at least one station device and/or a resource unit allocated to the target station device, wherein the target station device is a station device that is in the at least one station device and that is able to transmit the latency-sensitive data to the access point device in the first TXOP.

2. The method according to claim 1, wherein the first frame comprises first indication information, and the first indication information is used to indicate a data type corresponding to the buffer status information requested to be acquired.

3. The method according to claim 2, wherein the first indication information is carried in a common information field in the first frame.

4. The method according to any one of claims 1 to 3, wherein the first frame is a trigger frame.

5. The method according to any one of claims 1 to 4, wherein the first frame comprises at least one of following frames:
a buffer status report poll BSRP trigger frame, or a null data physical layer protocol data unit feedback report poll NFRP trigger frame.

6. The method according to any one of claims 1 to 5, wherein the target station device is a station device that is in the at least one station device and that feeds back the buffer status information to the access point device.

7. The method according to any one of claims 1 to 6, wherein the target station device is a station device in an active mode, or a station device in a power save mode and in an awake state.

8. The method according to any one of claims 1 to 7, further comprising:
receiving, by the access point device, a second frame transmitted by at least one station device, wherein the second frame comprises the buffer status information corresponding to the latency-sensitive data to be transmitted by the station device.

9. The method according to claim 8, wherein the second frame is a quality of service null QoS Null frame, and a QoS control field in the QoS Null frame is used to indicate an amount of data in a target buffer queue of the station device, and the target buffer queue is used to buffer the latency-sensitive data; or
the second frame is a null data physical layer protocol data unit NDP frame, and a transmission parameter of the NDP frame is used to determine whether a data amount of the latency-sensitive data to be transmitted is greater than a buffer threshold.

10. The method according to any one of claims 1 to 9, further comprising:
transmitting, by the access point device, a third frame to the target station device, wherein the third frame is used to indicate a resource unit allocated by the access point device to the target station device.

11. The method according to claim 10, wherein the third frame comprises a basic trigger frame.

12. The method according to claim 10 or 11, further comprising:
receiving, by the access point device, the latency-sensitive data transmitted by the target station device by using the resource unit allocated by the access point device to the target station device.

13. The method according to any one of claims 1 to 12, wherein a low-latency priority mode is enabled on the access point device, wherein in a case in which the low-latency priority mode is enabled, the access point device prioritizes transmission of the latency-sensitive data.

14. The method according to claim 13, wherein whether to enable the low-latency priority mode on the access point device is determined based on a transmission status of the latency-sensitive data in a basic service set BSS, or is set by a user.

15. The method according to claim 13 or 14, further comprising:
transmitting, by the access point device, a fourth frame, wherein the fourth frame is used to notify status information of the low-latency priority mode on the access point device.

16. The method according to claim 15, wherein the fourth frame comprises at least one of following:
a management frame, a probe response frame, an association response frame, a reassociation response frame, or an operation mode notification frame.

17. The method according to claim 15 or 16, wherein the status information of the low-latency priority mode on the access point device comprises whether the low-latency priority mode is enabled on the access point device and/or duration for which the low-latency priority mode is enabled.

18. The method according to any one of claims 1 to 17, wherein a low-latency priority mode is enabled on the at least one station device, and in a case in which the low-latency priority mode is enabled, the station device prioritizes transmission of the latency-sensitive data.

19. The method according to claim 18, wherein in a case in which the low-latency priority mode is enabled on the station device, the station device is always in an active mode, or is always in an awake state in a power save mode.

20. The method according to claim 18 or 19, wherein whether to enable the low-latency priority mode on the station device is determined based on a transmission status of the latency-sensitive data of the station device, or is set by a user, or is determined based on a request from the access point device.

21. The method according to any one of claims 18 to 20, further comprising:
transmitting, by the access point device, a fifth frame to the station device, wherein the fifth frame is used to request the station device to enable or disable the low-latency priority mode.

22. The method according to claim 21, wherein the fifth frame is a management frame.

23. The method according to any one of claims 18 to 22, further comprising:
receiving, by the access point device, a sixth frame transmitted by the station device, wherein the sixth frame is used to notify status information of the low-latency priority mode on the station device.

24. The method according to claim 23, wherein the sixth frame is a management frame.

25. The method according to claim 23 or 24, wherein the status information of the low-latency priority mode on the station device comprises whether the low-latency priority mode is enabled on the station device and/or duration for which the low-latency priority mode is enabled.

26. The method according to any one of claims 1 to 25, wherein the at least one station device comprises at least one of following:
a station device that has historically transmitted latency-sensitive data;
a station device that has historically established a latency-sensitive data flow by using a stream classification service; or
a station device on which a low-latency priority mode is enabled.

27. A wireless communication method, comprising:
receiving, by a station device, a first frame transmitted by an access point device, wherein the first frame is used to request to acquire buffer status information of latency-sensitive data to be transmitted by the station device; and
transmitting, by the station device to the access point device, the buffer status information of the latency-sensitive data to be transmitted by the station device.

28. The method according to claim 27, wherein the first frame comprises first indication information, and the first indication information is used to indicate a data type corresponding to the buffer status information requested to be acquired.

29. The method according to claim 28, wherein the first indication information is carried in a common information field in the first frame.

30. The method according to any one of claims 27 to 29, wherein the first frame is a trigger frame.

31. The method according to any one of claims 27 to 30, wherein the first frame comprises at least one of following frames: a buffer status report poll BSRP trigger frame, or a null data physical layer protocol data unit feedback report poll NFRP trigger frame.

32. The method according to any one of claims 27 to 31, wherein the station device is in an active mode, or in a power save mode and in an awake state.

33. The method according to any one of claims 27 to 32, further comprising:
transmitting, by the station device, a second frame to the access point device, wherein the second frame comprises the buffer status information corresponding to the latency-sensitive data to be transmitted by the station device.

34. The method according to claim 33, wherein the second frame is a quality of service null QoS Null frame, and a QoS control field in the QoS Null frame is used to indicate an amount of data in a target buffer queue of the station device, and the target buffer queue is used to buffer the latency-sensitive data.

35. The method according to claim 33, wherein the second frame is a null data physical layer protocol data unit NDP frame, and a transmission parameter of the NDP frame is used to determine whether a data amount of the latency-sensitive data to be transmitted is greater than a buffer threshold.

36. The method according to any one of claims 27 to 35, further comprising:
receiving, by the station device, a third frame transmitted by the access point device, wherein the third frame is used to indicate a resource unit allocated by the access point device to the station device.

37. The method according to claim 36, wherein the third frame comprises a basic trigger frame.

38. The method according to claim 36 or 37, further comprising:
transmitting, by the station device, the latency-sensitive data to the access point device by using the resource unit allocated by the access point device to the station device.

39. The method according to any one of claims 27 to 38, wherein a low-latency priority mode is enabled on the access point device, and in a case in which the low-latency priority mode is enabled, the access point device prioritizes transmission of the latency-sensitive data.

40. The method according to claim 39, wherein whether to enable the low-latency priority mode on the access point device is determined based on a transmission status of the latency-sensitive data in a basic service set BSS, or is set by a user.

41. The method according to claim 39 or 40, further comprising:
receiving, by the station device, a fourth frame transmitted by the access point device, wherein the fourth frame is used to notify status information of the low-latency priority mode on the access point device.

42. The method according to claim 41, wherein the fourth frame comprises at least one of following:
a management frame, a probe response frame, an association response frame, a reassociation response frame, or an operation mode notification frame.

43. The method according to claim 41 or 42, wherein the status information of the low-latency priority mode on the access point device comprises whether the low-latency priority mode is enabled on the access point device and/or duration for which the low-latency priority mode is enabled.

44. The method according to any one of claims 27 to 43, wherein a low-latency priority mode is enabled on the station device, and in a case in which the low-latency priority mode is enabled, the station device prioritizes transmission of the latency-sensitive data.

45. The method according to claim 44, wherein in a case in which the low-latency priority mode is enabled on the station device, the station device is always in an active mode, or is always in an awake state in a power save mode.

46. The method according to claim 44 or 45, wherein whether to enable the low-latency priority mode on the station device is determined based on a transmission status of the latency-sensitive data of the station device, or is set by a user, or is determined based on a request from the access point device.

47. The method according to any one of claims 44 to 46, further comprising:
receiving, by the station device, a fifth frame transmitted by the access point device, wherein the fifth frame is used to request the station device to enable or disable the low-latency priority mode.

48. The method according to claim 47, wherein the fifth frame is a management frame.

49. The method according to any one of claims 44 to 48, further comprising:
transmitting, by the station device, a sixth frame to the access point device, wherein the sixth frame is used to notify status information of the low-latency priority mode on the station device.

50. The method according to claim 49, wherein the sixth frame is a management frame.

51. The method according to claim 48 or 49, wherein the status information of the low-latency priority mode on the station device comprises whether the low-latency priority mode is enabled on the station device and/or duration for which the low-latency priority mode is enabled.

52. The method according to any one of claims 27 to 51, wherein the station device satisfies at least one of following conditions:
the station device has historically transmitted latency-sensitive data;
the station device has historically established a latency-sensitive data flow by using a stream classification service; or
a low-latency priority mode is enabled on the station device.

53. An access point device, comprising:
a communications unit, configured to: in a case in which an access point device predicts that at least one station device is required to transmit latency-sensitive data to the access point device in a first transmission opportunity TXOP, transmit a first frame to the at least one station device, wherein the first frame is used to request to acquire buffer status information of latency-sensitive data to be transmitted by the at least one station device, and the first TXOP is acquired by the access point device for transmitting non-latency-sensitive data to a first station device; and
a processing unit, configured to determine, based on a response status of the at least one station device to the first frame and/or content of the buffer status information, a target station device in the at least one station device and/or a resource unit allocated to the target station device, wherein the target station device is a station device that is in the at least one station device and that is able to transmit latency-sensitive data to the access point device in the first TXOP.

54. A station device, comprising:
a communications unit, configured to: receive a first frame transmitted by an access point device, wherein the first frame is used to request to acquire buffer status information of latency-sensitive data to be transmitted by the station device; and
transmit, to the access point device, the buffer status information of latency-sensitive data to be transmitted by the station device.

55. An access point device, comprising a processor and a memory, wherein the memory is configured to store a computer program, and the processor is configured to invoke and run the computer program stored in the memory to execute the method according to any one of claims 1 to 26.

56. A station device, comprising a processor and a memory, wherein the memory is configured to store a computer program, and the processor is configured to invoke and run the computer program stored in the memory to execute the method according to any one of claims 27 to 52.

57. A chip, comprising a processor, configured to invoke a computer program from a memory and run the computer program, to cause a device installed with the chip to execute the method according to any one of claims 1 to 26 or the method according to any one of claims 27 to 52.

58. A computer-readable storage medium, configured to store a computer program, wherein the computer program causes a computer to execute the method according to any one of claims 1 to 26 or the method according to any one of claims 27 to 52.

59. A computer program product, comprising computer program instructions, wherein the computer program instructions cause a computer to execute the method according to any one of claims 1 to 26 or the method according to any one of claims 27 to 52.

60. A computer program, wherein the computer program causes a computer to execute the method according to any one of claims 1 to 26 or the method according to any one of claims 27 to 52.
